# EUROPEAN PATENT SPECIFICATION

(11) **EP 4 433 742 B1**
(45) Date of publication and mention of the grant of the patent: **05.11.2025**
(21) Application number: 22812431.9
(22) Date of filing: 10.11.2022
(51) Int. Cl.: F16N 7/38, F01M 1/08, F01M 1/16

(54) **A LARGE SLOW-RUNNING TWO-STROKE ENGINE, A METHOD OF LUBRICATING IT AND A USE OF THE ENGINE AND THE METHOD**
GROSSER LANGSAM LAUFENDER ZWEITAKTMOTOR, VERFAHREN ZU SEINER SCHMIERUNG UND VERWENDUNG DES MOTORS UND DES VERFAHRENS
MOTEUR DE GRANDE DIMENSION À DEUX TEMPS À DÉPLACEMENT LENT, PROCÉDÉ DE LUBRIFICATION DE CE DERNIER ET UTILISATION DU MOTEUR ET DU PROCÉDÉ

(30) Priority: 17.11.2021 DK PA202170571
(43) Date of publication of application: 25.09.2024
(73) Proprietor: Hans Jensen Lubricators A/S, 9560 Hadsund (DK)
(72) Inventor: JESPERSEN, Lars, 9210 Aalborg SO (DK); RAVENDRAN, Rathesan, 9000 Aalborg (DK); KRISTENSEN, Nikolaj, 9240 Nibe (DK)
(74) Representative: Patrade A/S
(86) International application number: PCT/DK2022/050236
(87) International publication number: WO 2023/088526

(56) References cited:
- EP-A1- 1 951 995
- EP-A1- 2 545 257
- WO-A1-2019/114902
- WO-A2-2012/126473

## Description

### FIELD OF THE INVENTION

The present invention relates to a large combustion engine, for example large slow-running two-stroke engine, and a method of lubricating such engine and use thereof.

More specific the invention relates to a large slow-running two-stroke engine comprising a cylinder with a reciprocal piston inside and with a lubricant system comprising
- a lubricant supply,
- a plurality of lubricant injectors distributed along a perimeter of the cylinder for injection of lubricant into the cylinder at various positions on the perimeter during injection phases,
- a lubricant supply conduit and a lubricant return line connecting the lubricant supply with the lubricant injectors,
- at least one flowmeter for measuring the lubricant flow,
   the engine further comprising
- a controller for controlling the amount and timing of the lubricant injection by at least one of the lubricant injectors,
- a computer to which the controller is connected,
   wherein each injector comprises
- an inlet port flow-connected to the lubricant supply conduit for receiving lubricant from it,
- a nozzle with a nozzle aperture extending into the cylinder configured for injecting lubricant from the inlet port into the cylinder in the injection phase,
- an adjustable valve at the nozzle for opening and closing for flow of lubricant to the nozzle aperture from a pressure chamber in the injector during an injection-cycle,
- one flowmeter is arranged for all injectors in the engine, one flowmeter is arranged for all injectors in a cylinder or one flowmeter is arranged for each injector in the engine,
wherein the controller is arranged for transforming the measured actual flow into an actual amount.

The method relates to the lubricating of such large slow-running two-stroke engine comprising a cylinder with a reciprocal piston inside.

### BACKGROUND OF THE INVENTION

Due to the focus on environmental protection, efforts are on-going with respect reduction of emissions from marine engines. This also involves the steady optimization of lubrication systems for such engines, especially due to increased competition. One of the economic aspects gaining increased attention is a reduction of oil consumption, not only because of environmental protection but also because this is a significant part of the operational costs of ships. A further concern is proper lubrication despite reduced lubricant volume because the longevity of engines should not be compromised by the reduction of oil consumption. Thus, there is a need for steady improvements with respect to lubrication.

For lubricating of large slow-running two-stroke marine diesel engines, several different systems exist, including injection of lubrication oil directly onto the cylinder liner or injection of oil quills to the piston rings.

An example of a lubricant injector for a marine engine is disclosed in EP1767751, in which a non-return valve is used to provide the lubricant access to the nozzle passage inside the cylinder liner. The non-return valve comprises a reciprocating spring-pressed ball in a valve seat just upstream of the nozzle passage, where the ball is displaced by pressurised lubricant. The ball valve is a traditional technical solution, based on a principle dating back to the start of the previous century, for example as disclosed in GB214922 from 1923.

An alternative and relatively new lubrication method, compared to traditional lubrication, is commercially called Swirl Injection Principle (SIP). It is based on injection of a spray of atomized droplets of lubricant into the scavenging air swirl inside the cylinder. The helically upwards directed swirl results in the lubricant being pulled towards the Top Dead Centre (TDC) of the cylinder and pressed outwards against the cylinder wall as a thin and even layer. This is explained in detail in international patent applications WO2010/149162 and WO2016/173601. The injectors comprise an injector housing inside which a reciprocating valve member is provided, typically a valve needle. The valve member, for example with a needle tip, closes and opens the lubricant's access to a nozzle aperture according to a precise timing. In current SIP systems, a spray with atomized droplets is achieved at a pressure of, typically, 35-40 bar, which is substantially higher than the oil pressure of less than 10 bar that are used for systems working with compact oil jets that are introduced into the cylinder. In some types of SIP injectors, the high pressure of the lubricant is also used to move a spring-loaded valve member against the spring force away from the nozzle aperture such that the highly pressurised oil is released therefrom as atomized droplets. The ejection of oil leads to a lowering of the pressure of the oil on the valve member, resulting in the valve member returning to its origin and remaining there until the next lubricant cycle where highly pressurized lubricant is supplied to the lubricant injector again.

In such large marine engines, a number of injectors are arranged in the circumference of the cylinder, and each injector comprises one or more nozzle apertures for delivering lubricant jets or sprays into the cylinder from each injector. Examples of SIP lubricant injector systems in marine engines are disclosed in international patent applications WO2002/35068, WO2004/038189, WO2005/124112, WO2010/149162, WO2012/126480, WO2012/126473, WO2014/048438, and WO2016/173601.

For SIP injection, a precisely controlled timing is essential in addition to the objective of minimizing oil consumption. For this reason, SIP systems are specially designed for quick reactive response during injection-cycles.

International patent application WO2011/110181 discusses the importance of precise lubricant dosing in a lubrication system of marine engines. For the precise timing of the dosing, a double valve system is disclosed for separate control of opening and closing time of the lubricant injector, allowing the system to be adjusted to a short dosing period. However, precise adjustment of the dosing period is not sufficient for a precise dosing volume, as the dispensed volume is not only defined by the length of the time of dispensing but also depends on the pressure of the lubricant as well as on the viscosity, which, in turn, depends on the temperature.

WO02/35068 discloses an injector that contains a pumping system, in which a reciprocal plunger-member is moved forwards towards the nozzle in an injection phase, for thereby causing pressure rise in a predetermined lubricant volume inside the injector and for pumping this predetermined lubricant volume through the nozzle aperture. This pumping system is activated by high pressure oil which is fed to the injector from the controller. The controller feeds the high-pressure oil centrally to all injectors. Each injector has a controllable motor-driven actuator for adjustment of the stroke length for the reciprocal plunger. Such a system is simple in that it regulates the injection centrally by the high-pressure oil delivery from the controller the adjustment works identical for all injectors with respect to the timing and frequency for the injection. However, such injector is relatively complex and costly in that each injector comprises a motorised volume adjustment regulation system. Also, the fact that a motor is provided for each injector increases the risk for failure, not only due to the motor itself but also due to the risk for heat and mechanical damage to the necessary electrical cabling. It would be desirable to provide a more robust and precise system.

With the introduction of the HJL Smartlube 4.0 system the performance of the lubrication systems is increased. however, there is a desire to obtain an engine and a method which in automatic way ensures that the system provides a desired amount of lubricant independent from external disturbances like change in lubricant type, pressure and temperature and mechanical wear of components in the lubrication system.

Moreover, it is desired that in situation where an injector is taken out of service then the remainder of the injectors will automatically regulate up the delivered amount of lubricant.

The principles which are provided in the prior art are not optimum, especially when high pressure and quick reaction is required, such as for SIP injection. This is partly due to the oil supply lines being relatively long and may be subject to minute expansion and contraction when pressure is applied and released from the tubes, which leads to uncertainty in timing and injected volume.

It is therefore desirable to provide a system which automatically provide a more precise delivery of the desired lubricant amount.

The engine and the method described by way of introduction and as defined in the preamble of independent claims for the engine and the method is known from the above mentioned WO 2021/126473 A2.

This document does not disclose a controller or database in which a number of desired values for lubricant amount to be injected for specific operation mode. The document neither teaches a controller arranged for calibration of the injectors through a mapping of lubricant amount injected at different injection-phases or that the results may be used for determining the injection-phases for the injector for obtaining the desired lubricant amount at an injection.

### DESCRIPTION / SUMMARY OF THE INVENTION

It is the objective of the invention to provide an improvement in the prior art systems in order to obtain the desired effect in form of provide a more precise delivery of the desired lubricant amount in automatic way.

Especially, it is the objective to improve lubrication with SIP injectors or lubrication with a common rail system with traditional non-return valves in large combustion engines, for example in a large slow-running two-stroke engine. However, the method according to the invention may also be used in large four-stroke combustion engines, for example marine engines or combustion engines for power plants. These objectives are achieved by a large combustion engine, for example slow-running two-stroke engine, with a plurality of injectors, a method for lubricating such an engine and by a use thereof as set forth in the following.

The invention may be used in a lubricating principle where the injectors receive pressurised lubrication oil from a lubricator through lubricant feed conduits, one for each injector.

The invention may also be used in a lubricating principle where the multiple lubricant feed conduits are substituted by a single common feed line. Then the pipe connections feeds lubricant to the injectors by a "common rail" system in which all injectors of an engine cylinder, or a subgroup of injectors for a single engine cylinder, are receiving lubricant through the single lubricant feed line in common and simultaneously.

Optionally, there is provided a return line for back flow of lubricant from the injectors.

The engine is peculiar in that
the engine further comprises a number of desired values for lubricant amount to be injected, typically specified as a feed rate, for specific operation mode, which desired values are stored in a database in the controller,
that the controller is arranged for comparing the calculated actual amount to the desired value and to control the injectors and adjust the setting thereof in order to obtain the desired values for lubricant amount to be injected for a specific operation mode and
that the controller is arranged for calibration of the injectors by measuring the lubricant amount injected at different injection-phases and mapping the results and using the results for determining the injection-phases for the injector in order to obtain the desired lubricant amount at an injection.

The method according to the invention involves lubricating a large slow-running two-stroke engine comprising a cylinder with a reciprocal piston inside and with a system comprising
- a lubricant supply,
- a plurality of lubricant injectors distributed along a perimeter of the cylinder for injection of lubricant into the cylinder at various positions on the perimeter during injection phases,
- a lubricant supply conduit and a lubricant return line connecting the lubricant supply with the lubricant injectors,
- at least one flowmeter for measuring the lubricant flow,
   the engine further comprising
- a controller for controlling the amount and timing of the lubricant injection by at least one of the lubricant injectors,
- a computer to which the controller is connected,
   wherein each injector comprises
- an inlet port flow-connected to the lubricant supply conduit for receiving lubricant from it,
- a nozzle with a nozzle aperture extending into the cylinder configured for injecting lubricant from the inlet port into the cylinder in the injection phase,
- an adjustable valve at the nozzle for opening and closing for flow of lubricant to the nozzle aperture from a pressure chamber in the injector during an injection-cycle,
   wherein the method comprises in cyclic operation
- in the injection phase, providing pressure-liquid at inlet port of the injector and exerting force on the valve and by the force driving a valve body into motion inside the injector and upon pressure rise above the predetermined limit, pumping a predetermined lubricant volume through the nozzle aperture into the cylinder,
- after the injection phase, retracting the valve body by draining pressure-liquid from the injector,
- during retraction re-filling the pressure chamber in the injector with lubricant for a subsequent injection phase,
- providing one flowmeter for all injectors in the engine, one flowmeter for all injectors in a cylinder or one flowmeter for each injector in the engine,
- measuring with the at least one flowmeter the lubricant flow,
- transforming in the controller the measured actual flow into an actual amount,
Said method being peculiar in that the method comprises the steps of:
- providing, for the engine, a number of desired values for lubricant amount to be injected, typically specified as a feed rate, for specific operation mode, which desired values are stored in a database in the controller,
- comparing the calculated actual amount to the desired value, and
- controlling the injectors and adjusting the setting thereof in order to regulate the amount to the desired value for lubricant amount to be injected for a specific operation mode,
- effecting a regulation of the lubricant amount continuously at different time intervals, which intervals vary between 10 ms. and 10 min., wherein the continuously regulation includes adjustment of the lubricant amount at different sample intervals, which sample intervals vary from one regulation per injection to a regulation based on 100 preceding injections, or
- effecting an adjustment of the lubricant amount discontinuously at time intervals between 1minute and 30 days, preferably between 1 hour and 30 days and more preferably between 1 day and 30 days, wherein the discontinuous adjustment includes a calibration of the injectors, which calibration is effected by measuring the lubricant amount injected at different injection-phases and mapping the results and using the results for determining the injection-phases for the injector in order to obtain the desired lubricant amount at an injection.

In order to fully understand the invention, it is pointed out that it has been discovered that lubricant conduits of a substantial length from a pumping system to the cylinder with the plurality of injectors introduce imprecision of the system. Long conduits tend to expand and retract slightly when being exposed to highly pressurised lubricant, which leads to slight uncertainties in timing and volume of injected lubricant. Furthermore, the lubricant is subject to minute compression and expansion during an injection cycle, which adds to the effect. Although, this effect is small, it introduces errors in the range of milliseconds for the injection, which is substantial in comparison to the short injection time, which can be as short as 10 milliseconds or less. Such effect of imprecise timing has substantial influence on lubrication systems due to the high lubricant pressure and the short injection periods. Also, it is noticed that the injection amount is typically regulated by the time length in which pressurised oil is supplied to the nozzle in an injection cycle, in which case, uncertainty factors that affect a precise timing should be minimised, if not eliminated. Improvement with respect to the injection is achieved with an injector as described herein because the selection-valve system is inside the injector, which results in the distance from the selection-valve system to the nozzle being short.

With the present invention the control of the injected lubricant amount is effect based on a measured actual flow and a calculation of the injected lubricant amount. Based on the calculation the lubricant amount the controller provides a setting of the injector in case the actual lubricant amount is different from the desired amount. Hereby it is possible to eliminate the risk that a change in operational parameters will give an incorrect lubricant amount in an injection.

The controller controls the adjustable valve and regulates the stroke length of a valve member in form of a plunger, whereby the lubricant amount is variably adjustable between injection phases by a stroke length adjustment mechanism. When the plunger is not fully retracted to the maximum possible retraction position adjustment is obtained. As the stroke of the plunger is always to the same position, for example the same most-forward position, varying the retraction position of the plunger after retraction regulates the stroke length.

The controller may be built into the injector or may be connected to the injector and the flowmeter by wiring or in a wireless way.

The controller may also be arranged for controlling the lubricant type used.

The engine is peculiar in that the controller is arranged for calibration of the injectors by measuring the lubricant amount injected at different injection-phases and mapping the results and using the results for determining the injection-phases for the injector in order to obtain the desired lubricant amount at an injection.

Hereby it is possible to calibrate the injectors. Calibration may be effected when the engine is in service. Alternatively, the calibration may be effected when the engine is out of service. A more precise injection is obtained as the deviation between the injectors is reduced.

**In** one embodiment the flowmeter may be arranged for all injectors in the engine. In another embodiment one flowmeter may be arranged for all injector in one cylinder. And in yet another embodiment one flowmeter is arranged for each injector in the engine.

**In** some embodiments, the maximum possible retraction position of the plunger is the most rearward possible position at maximum distance from the nozzle aperture But it is possible that the plunger is held at a distance from the most rearward possible position. By regulating the distance, the injection amount for the next injection is regulated, as the stroke length is reduced relatively to the maximum possible retraction position. The effect is similar to the screw-adjustable end-stop in WO02/35068, however, the stroke length adjustment mechanism can be provided centrally and remotely from the injector, which is in contrast to the injector of WO02/35068.

The method and the engine according to the invention automatically provides a precise delivery of the desired lubricant amount by adjusting the adjustable valve.

According to the principle of the present invention it is possible to regulate automatically and continuously the lubricant amount to be injected. Furthermore, the principle also provides for a calibration of the injectors, whereby the deviation of the amount injected by the injectors is reduced significantly.

The engine according to the present invention may comprise a hydraulically driven inlet-valve system wherein each injector comprises
- a lubricant inlet port flow-connected to the lubricant feed conduit for receiving lubricant from it;
- a nozzle with a nozzle aperture extending into the cylinder configured for injecting lubricant from the inlet port into the cylinder in the injection phase;
- an outlet-valve system at the nozzle for opening and closing for flow of lubricant to the nozzle aperture during an injection-cycle;
- a front chamber inside the injector between the lubricant inlet port and the outlet-valve system for receiving and accumulating a predetermined volume of lubricant from the inlet port prior to an injection phase;
- wherein the outlet-valve system is configured for opening for flow of lubricant from the front chamber through the outlet-valve system and to the nozzle aperture during an injection phase upon pressure rise above a predetermined pressure limit in the front chamber and at the outlet-valve system and configured for closing the outlet-valve system after the injection phase;
- a pressure-control port flow-connected to the pressure-control conduit for receiving pressure-liquid therefrom in the injection phase;
- a pressure chamber in communication with the pressure-control port for periodically receiving the pressure-liquid from the pressure-control port in the injection phase and for drain thereof after the injection phase;
- a reciprocal hydraulic-driven actuator-plunger in contact with the pressure chamber and pre-stressed by a spring-load from an actuator-plunger spring and being configured for motion that is driven by the pressure-liquid in the pressure chamber in the injection phase and configured for causing the pressure rise in the lubricant in the front chamber above the predetermined pressure limit by its motion in the injection phase;
wherein the engine further comprises a stroke length adjustment mechanism for variably adjusting the stroke length of the reciprocal hydraulic-driven actuator-plunger. In such embodiment the stroke length adjustment mechanism is configured for variable adjustment of the amount of pressure-liquid that is drained from the pressure chamber between injection phases.

The effect of the variable adjustability is similar to the screw-adjustable end-stop in WO02/35068, however, the stroke length adjustment mechanism can be provided centrally and remotely from the injector, which is in contrast to the injector of WO02/35068.

In some practical embodiments, the stroke length adjustment mechanism comprises a pressure regulator for variably regulating an idle-pressure in the pressure chamber between the injection phases, wherein the idle-pressure is lower than the predetermined limit for only partly counteracting the spring-load from the actuator-plunger spring on the actuator-plunger and thereby variably adjusting the retracted position for the actuator-plunger.

The outlet-valve system closes off for back-pressure from the cylinder and also prevents lubricant to enter the cylinder unless the outlet-valve is open. In addition, the outlet-valve system assists in a short closing time after injection, adding to precision in timing and volume of injected lubricant.

The engine comprising a hydraulically driven inlet-valve system may be operated according to a method comprising the stroke length adjustment mechanism is configured for variable adjustment of the amount of pressure-liquid that is drained from the pressure chamber (27) between injection phases and wherein the method comprises adjusting the stroke length between injection cycles by adjusting the amount of pressure-liquid that is drained from the pressure chamber (27) after the injection phase.

The engine and the method comprising the hydraulically driven inlet-valve system known from WO 2019/114905. However, the engine differs as it comprises a flowmeter 35. The flowmeter shall be used for measuring the lubricant flow in the lubricant feed conduit 9.

The engine according to the present invention may also comprise an electrically driven inlet-valve system wherein each injector comprises
- a lubricant inlet port for receiving lubricant from a lubricant feed conduit;
- a nozzle with a nozzle aperture extending into the cylinder for injecting lubricant from the inlet port into a cylinder;

- an outlet-valve system at the nozzle for opening and closing for flow of lubricant to the nozzle aperture during an injection cycle; the outlet-valve system being configured for opening for flow of lubricant to the nozzle aperture during an injection phase upon pressure rise above a predetermined limit at the outlet-valve system and for closing the outlet-valve system after the injection phase. In such embodiment each injector may comprise an electrically-driven inlet-valve system electrically connected to the controller and arranged between the lubricant inlet port and the nozzle for regulating the lubricant that is dispensed through the nozzle aperture by opening or closing for lubricant flow from the lubricant inlet port to the nozzle in dependence of an electrical control-signal received from the controller; wherein the inlet-valve system is arranged upstream of and remotely from the nozzle and upstream of and remotely from the outlet-valve system.

According to a specific embodiment of this type the inlet-valve system may comprise an inlet non-return valve with an inlet-valve member pre-stressed against an inlet-valve seat by an inlet-valve spring and arranged for throughput of lubricant from the lubricant inlet port to the outlet-valve system upon displacement of the inlet-valve member from the inlet-valve seat against force from the inlet-valve spring; wherein the inlet-valve system further comprises an electrically-driven rigid displacement-member for displacing the inlet-valve member from the inlet-valve seat during lubricant injection.

In order to provide a better speed and volume control of lubricant ejection by the injector, each of the injectors comprises an electrically-driven inlet-valve system electrically connected to the controller and arranged between the lubricant inlet port and the nozzle for regulating the lubricant that is dispensed through the nozzle aperture by opening or closing for lubricant flow from the lubricant inlet port to the nozzle in dependence of an electrical control-signal received from the controller. The inlet-valve system is arranged upstream of and remotely from the nozzle, and it is also arranged upstream of and remotely from the outlet-valve system.

The inlet-valve system of the injector doses the amount of lubricant for injection by the time the inlet-valve system stays open for the injection phase. The time is determined by the controller.

The Engine comprising an electrically-driven inlet-valve system may be operated according to a method comprising sending an electrical control signal from the controller to the electrically-driven inlet-valve system for starting an injection phase, and as a consequence thereof causing flow of lubricant from the lubricant feed conduit through the lubricant inlet port, through the inlet-valve system, and into a conduit that flow-connects the inlet-valve system with the outlet-valve system, by the lubricant flow into the conduit increasing pressure in the conduit and at the outlet-valve system, by the pressure rise causing the outlet-valve system to open for flow of lubricant from the conduit to the nozzle aperture and injecting lubricant into the cylinder through the nozzle aperture; at the end of the injection phase, changing the electrical control signal from the controller to the inlet valve system and causing the inlet-valve system to close for lubricant supply from the lubricant inlet port to the conduit.

The engine and the method comprising the electrically driven inlet-valve system is known from WO 2019/114903. However, the engine differs as it comprises the flowmeter. The flowmeter shall be used for measuring the lubricant flow in the lubricant feed conduit.

According to a further embodiment the engine is peculiar in that the lubricant system is chosen from mechanically driven systems, hydraulically driven systems and common-rail systems.

The principle according to the invention is flexible and may be used in different lubrication systems.

According to a further embodiment the engine is peculiar in that the flowmeter is provided in the lubricant supply conduit connected to the injector.

Hereby the actual flow into the injector is measured. The flowmeter may be arranged immediately in front of the inlet port of a single injector or may alternatively be arranged in a common supply conduit for more injectors, e.g., injectors in a single cylinder.

According to a further embodiment the engine is peculiar in that the flowmeter, in the situation where one flowmeter is arranged for each injector in the engine, is integrated in the injector.

Hereby a compact system is obtained.

According to a further embodiment the engine is peculiar in that the controller is arranged for calibration of the injectors by measuring the lubricant amount injected at different injection-phases and mapping the results and using the results for determining the injection-phases for the injector in order to obtain the desired lubricant amount at an injection.

Hereby it is possible to calibrate the injectors. Calibration may be effected when the engine is in service. Alternatively, the calibration may be effected when the engine is out of service. A more precise injection is obtained as the deviation between the injectors is reduced.

The principle according to the invention makes it possible the regulations are effected either at time intervals or at sample intervals based on a number of injections. With the term "continuously" is meant that the regulation is effected as a series of regulations with a given frequency without a pause between the regulations. Alternatively, the regulations are effected with dis intervals to be decided by the user.

In case the method comprises an adjustment of the lubricant amount effected discontinuously at time intervals, then the time intervals may be low, and the lower limit may be 1 minute only. Hereby the adjustment will occur more or less as a continuously adjustment. In some embodiments the method comprises that the discontinuous adjustment includes a calibration of the injectors, which calibration is effected by measuring the lubricant amount injected at different injection-phases and mapping the results and using the results for determining the injection-phases for the injector in order to obtain the desired lubricant amount at an injection.

It is possible to calibrate the injectors at time intervals decided by the user. As mentioned earlier calibration may be effected when the engine is in service.

In some embodiments the method comprises that the calibration of the injectors is effected for the working spectrum of the injectors, which working spectrum typically is between 0 and 100 ms.

In some embodiments the method comprises that the steps of implementing an automatic test program, controlling that the injectors in a cylinder supply the desired and sufficient lubricant amount.

In case the test shows that the requirements for sufficient lubricant amount then it is possible to effect a calibrating automatically under control of the controller or alternatively the calibration may be effected manually.

In some embodiments the method comprises that a calibration of the injectors is effected manually or automatically in the situation where an incorrect lubricant amount is provided, especially in case the lubricant amount is insufficient.

In some embodiments the method comprises that the test program involves a step of correcting the calibration.

It is possible that the test program includes a routine of amending the calibration parameters.

In some embodiments the method comprises that the regulation of the amount of lubricant is controlled by a feedback control/regulation, for example a PID regulation or a more sophisticated model-based regulation
In some embodiments the method comprises that the method involves storing regulation values in a database in the controller.

In some embodiments the method comprises that the method involves storing of calibrated timing values for each injector in in a database in the controller.

The method and the engine according to the invention is especially suitable for use for lubricant injection into the ring pack or for SIP injection into the cylinder of a large marine engine or combustion engine for a power plant at a lubricant pressure in the range of 25 bar to 100 bar. The method is also suitable for lubrication with a combination of SIP injection and injection into the ring pack.

### Definitions

The term "regulate" refers to a situation where the lubricant amount is amended in order to correspond to a desired amount when the engine is in service.

The term "adjust" refers to the situation where the lubricant amount is amended when the injectors are calibrated.

The term "injector" is used for an injection valve system comprising a housing with a lubricant inlet and one single or more injection nozzles with a nozzle aperture as a lubricant outlet and with a movable valve member inside the housing, which opens and closes access for the lubricant to the nozzle aperture. Although, the injector has a single nozzle that extends into the cylinder through the cylinder wall, when the injector is properly mounted, the nozzle itself, optionally, has more than a single aperture. For example, nozzles with multiple apertures are disclosed in WO2012/126480.

The term "injection-phase" is used for the time during which lubricant is injected into the cylinder by an injector.

The term "idle-phase" is used for the time between injection-phases.

The term "idle state" is used for the state of a component in the idle-phase.

The term "idle-phase position or orientation" is used for the position or orientation of a movable component when in the idle state during the idle-phase, which is in contrast to an injection-phase position.

The term "injection cycle" is used for the time it takes to start an injection sequence and until the next injection sequence starts. For example, the injection sequence comprises a single injection, in which case the injection cycle is measured from the start of the injection-phase to the start of the next injection-phase. Alternatively, the injection sequence comprises multiple injections, for example multiple injections above the piston before the piston passes the injectors on its way to the TDC, for example a first injection with one lubricant followed by another injection of another lubricant, and potentially further lubricants and/or additives. Such double or multiple injections leads to oil mixing in the cylinder before the piston reaches the TDC. For example, there is one injection cycle for each revolution of the engine. However, it is also possible to have one injection cycle after a number of engine revolutions.

The term "timing" of the injection is used for the adjustment of the start of the injection-phase by the injector relatively to a specific position of the piston inside the cylinder.

The term "frequency" of the injection is used for the number of repeated injections by an injector per revolution of the engine. If the frequency is unity, there is one injection per revolution. If the frequency is 1/2, there is one injection per every two revolutions. This terminology is in line with the above-mentioned prior art.

The term "pressurized lubricant" is used for lubricant provided at a pressure high enough that it can be used for injection as a jet or spray into the cylinder. The latter is in contrast to oil injection by quills between piston rings. The pressure depends on the purpose and form of injection and is typically above 10 bar. For SIP injection, the pressure is typically higher, for example above 25 bar.

The term "flowmeter" is used for a component which is able to measure a flow independent of the method used, e.g. pressure difference, viscosity, temperature, amount.

### Practical embodiments

The large engine, for example slow-running two-stroke engine, optionally a marine engine or engine for a power plant, comprises a cylinder with a reciprocal piston inside and with a plurality of lubricant injectors fixed to a wall of the cylinder and extending through the cylinder wall. The injectors are distributed along a perimeter of the cylinder and configured for injection of lubricant into the cylinder at various positions on the perimeter during injection-phases. For example, the large engine, such as slow-running two-stroke engine, is a marine engine or a large engine in power plants. Typically, the engine is burning diesel or gas fuel, for example natural gas fuel.

The engine comprises also a lubricant supply with a pressurized lubricant, typically pressurized by a lubricant feed pump. Optionally, the engine comprises more than one lubricant supply with correspondingly more than one type of lubricant, and correspondingly more than one lubricant feed pump.

Each of the plurality of injectors is connected with each of its lubricant inlets to lubricant supply through a corresponding feed conduit. Each lubricant supply includes a potential pressure source, typically lubricant pump, which raises the pressure of the corresponding lubricant to an adequate level. For the described system, it suffices to provide a constant lubricant pressure at the corresponding lubricant inlet of the injector.

The injectors are configured for the type of lubricant to be injected. The inlet can be used to provide and add not only lubricants but also potential additives. For example, the injector optionally has more inlets of which one is used for lubricants, such as lubrication oils, and one is used for an additive.

The engine further comprises a controller. The controller is configured for controlling the amount and timing of the injection of the lubricant by the plurality of injectors. Optionally, also the injection frequency is controlled by the controller. For precise injection, it is an advantage if the controller is electronically connected to a computer or comprises a computer, where the computer is monitoring parameters for the actual state and motion of the engine. Such parameters are useful for the control of optimized injection. Optionally, the controller is provided as an add-on system for upgrade of already existing engines. A further advantageous option is a connection of the controller to a Human Machine Interface (HMI) which comprises a display for surveillance and input panel for adjustment and/or programming of parameters for injection profiles and optionally the state of the engine. Electronic data connections are optionally wired or wireless or a combination thereof.

In a concrete embodiment, the injector comprises a lubricant inlet for receiving the lubricant from a lubricant feed conduit for injection of the lubricant into the cylinder. The lubricant inlet of the injector is connected to the lubricant supply though the feed conduit.

The injector has a lubricant flow path from the lubricant inlet to the at least one nozzle for lubricant flow from the lubricant inlet through the at least one nozzle into the cylinder.

The injector comprises one nozzle or more than one nozzle, for example two nozzles. Each nozzle has a nozzle aperture, extending into the cylinder for lubricant injection in an injection-phase. Optionally, a nozzle has more than a single aperture. For example, nozzles with multiple apertures are disclosed in WO2012/126480. In some embodiments, the injector comprises a single nozzle with a single nozzle aperture.

In particular, each injector comprises an internal actuator-driven valve system in the lubricant flow path, wherein the valve system is configured for selectively switching from the idle state without injection to an injection state with injection of the lubricant, into the cylinder through the at least one nozzle in the injection-phase in dependence of the received injection-phase signals.

Each injector comprises an actuator for driving the valve system. The actuator is functionally connected to the controller and configured for being activated by the controller for selectively driving the valve system and causing injection of the lubricant under control by the controller as a consequence of the activation of the actuator by the controller. The valve system, under control by the controller, is used for selecting which amount and timing to be used for injections and in which sequence.

In operation, the actuator is activated by the controller for starting an injection-phase with the lubricant. As a consequence thereof, the valve system is caused to open for flow of the lubricant through the flow path and injecting the lubricant into the cylinder. At the end of the injection-phase, the actuator is caused to close the valve system and stop lubricant supply.

### Example with pressure control

In a specific embodiment the engine comprises a lubricant feed conduit containing lubricant at a first pressure and a pressure-control conduit containing pressure-liquid at a pressure higher than the first pressure. In such case the injector comprises an internal hydraulic-driven pumping system where the pressure-liquid is used for driving the pumping system inside the injector housing by which the lubricant is pressurized in the injector and ejected therefrom. The injector comprises a lubricant inlet port, flow-connected to the lubricant feed conduit for receiving lubricant from it for injection into the cylinder. The injector also comprises a pressure-control port, flow-connected to the pressure-control conduit for receiving pressure-liquid therefrom in the injection phase.

The injector comprises the front chamber inside the injector between the lubricant inlet port and the outlet-valve system for receiving and accumulating a pre-determined volume of lubricant from the inlet port prior to an injection phase.

A pressure chamber in the injector is in communication with the pressure-control port for receiving the pressure-liquid from the pressure-control port in the injection phase. The pressure-liquid in the pressure chamber drives a pumping system in the injector. The pumping system comprises a reciprocal hydraulic-driven actuator-plunger in contact with the pressure chamber and pre-stressed by a spring-load from an actuator-plunger spring and configured for being driven, for example in a direction towards the nozzle, by the pressure-liquid in the pressure chamber in the injection phase, by which it is causing pressure rise in the lubricant in the front chamber above the predetermined limit and causes pumping of this predetermined lubricant volume through the non-return valve and the nozzle aperture into the cylinder.

### Injection

Optionally, the injection phase comprises multiple injections, for example multiple injections above the piston before the piston passes the injectors on its way to the TDC, for example a first injection with lubricant followed by another injection of the lubricant, and potentially further lubricants and/or additives. Such double or multiple injections, especially when in SIP operation, leads to oil mixing in the cylinder before the piston reaches the TDC. The variety of selecting lubricant for injection, its amount and its timing as controlled by the controller makes a high variety of injection sequences possible, for example combinations of at least two of:
- one or more injections under the piston,
- one or more injections onto the piston,
- one or more injections above the piston during a single injection cycle.

For the various injections, also the selections for the lubricant or lubricants, potentially with additives, can be varied,
For example, the actuator is an electrically controlled actuator and is electrically connected to the controller by an electrical connection for receiving injection-phase signals from the controller, the injection-phase signals indicating the timing for the injection. For the injection-phase, an electrical control signal is sent from the controller to each of the injectors for starting an injection-phase with the lubricant. As a consequence thereof, the valve system opens for flow of the corresponding lubricant through the flow path and injects it into the cylinder. At the end of the injection-phase, the electrical control signal from the controller to the injector is changed, causing the valve system to close for lubricant injection and return to the idle state.

Optionally, the actuator comprises an electrical solenoid arrangement with a stationary solenoid part and a movable solenoid part. The valve system is connected to the movable solenoid part for being driven by the actuator upon electrical excitation of the solenoid, wherein the solenoid is configured for excitation by the injection-phase signals from the controller.

The term "a solenoid coil" should be understood as "at least one solenoid coil", as it is possible and, in some cases, advantageous to use more than one coil, for example two or three coils.

The term "signal" from the controller is used her for an electrical current that flows from the controller to the injector. In some embodiments, the signal itself can be used for driving the actuator, for example an electromechanical actuator, if the current is sufficiently strong. For example, for switching the driving direction of an electromechanical actuator, the direction of the current is switched to an opposite direction. However, alternatively, the injector could comprise an electro-switch where the signal from the controller opens for flow of a current sufficiently strong to drive the actuator. In the latter case, the signal lines from the controller to the electro-switch can be accomplished by very thin wiring. Alternatively, the term "signal" also is used for a wireless signal.

Alternatively, the actuator is a hydraulic or pneumatic actuator. Such hydraulic or pneumatic actuator in the injector is, optionally, also electrically controlled. For example, an electrical signal from the controller to the injector causes an electromechanical actuator-valve of the injector to open for hydraulic or pneumatic flow into the actuator for driving the valve system hydraulically or pneumatically. Optionally, an electrical signal from the controller to the injector causes an electromechanical actuator-valve to open for hydraulic or pneumatic flow into the actuator for driving the actuator itself, which then, in turn, by a mechanical connection drives the valve system.

In some embodiments, the valve system is configured to select only one injector at a time among multiple injectors for supply of lubricant and for injection thereof. In some embodiment, alternatively or in addition, the valve system is configured to select more than one injector at a time among multiple injectors for supply of lubricant and for injection thereof in order to inject simultaneously multiple lubricants or lubricant in combination with additive.

In some embodiments, the injector has more than one nozzle, and multiple lubricants and additives can be injected into the cylinder through separate nozzles of the injector. In other embodiments, multiple lubricants and additives are injected into the cylinder through a single nozzle and potentially mixed inside the injector prior to ejection from the nozzle aperture.

In practical embodiments, the injector comprises a base and a rigid, optionally cylindrical, flow chamber, which is rigidly connecting the base with the nozzle for fixing the nozzle inside the cylinder wall when the base is fixed to the cylinder wall. Due to the base being provided at the opposite end of the flow chamber relatively to the nozzle, it is typically located on or at the outer side of the cylinder wall. For example, the injector comprises a flange at the base for mounting onto the outer cylinder wall. Alternatively, in order to mount the injector in the cylinder wall, the injector comprises a flange provided around the flow chamber. For example, the flange is bolted against the cylinder wall.

Advantageously, the base comprises the first and second inlet and the potential further inlets. The flow chamber is hollow and contains the flow path for lubricant flow from the lubricant inlet through the flow chamber and to the nozzle for injection of the lubricant into the cylinder. Optionally, the valve member is located in the flow chamber or in the base.

For example, the actuator is provided outside the cylinder wall when the injector is mounted at the cylinder wall. Optionally, it is fixed to the base.

In practice, the injection-phase signal is received by the actuator, causing the actuator to move the valve member in dependence of the injection-phase signal to an injection-phase position or orientation, which leads correspondingly to opening of the flow path for injection of the lubricant into the cylinder.

For example, the actuator is mechanically connected to the selection-valve member by an actuator extension for driving the valve member by the actuator extension. This is advantageous if the valve member is located in the flow chamber and, thus, inside the cylinder wall, whereas the actuator is located outside the cylinder wall. In this embodiment, the operation comprises moving the valve member by the actuator by using the actuator extension.

### Outlet-valve system

Optionally, each of the injectors comprises an outlet-valve system at the nozzle configured for opening for flow of lubricant to the nozzle aperture during an injection-phase upon pressure rise above a predetermined limit at the outlet-valve system and for closing the outlet-valve system after the injection-phase when the pressure drops. The outlet-valve system closes off for back-pressure from the cylinder and also prevents lubricant to enter the cylinder in the idle-phase between injection-phases. In addition, the outlet-valve system assists in a short closing time after injection, adding to precision in timing and volume of injected lubricant.

**In** these embodiments, the injector comprises a lubricant flow path from the lubricant inlet through the valve system and to the outlet-valve system for flow of the lubricant from the lubricant inlet, through the valve system and the outlet-valve system and out of the injector at the nozzle aperture. The valve system is arranged as part of the injector upstream of and optionally spaced from the nozzle. Optionally, the valve system is arranged upstream of and spaced from the outlet-valve system.

For example, the outlet-valve system comprises an outlet non-return valve. **In** the outlet non-return valve, the outlet-valve member, for example a ball, ellipsoid, plate, or cylinder, is pre-stressed against an outlet-valve seat by an outlet-valve spring. Upon provision of pressurised lubricant in a flow chamber upstream of the outlet-valve system, the pre-stressed force of the spring is counteracted by the lubricant pressure, and if the pressure is higher than the spring force, the outlet-valve member is displaced from its outlet-valve seat, and the outlet non-return valve opens for injection of lubricant through the nozzle aperture into the cylinder. For example, the outlet-valve spring acts on the outlet-valve member in a direction away from the nozzle aperture, although, an opposite movement is also possible.

For example, for lubricating the engine, the method comprises sending an electrical control signal from the controller to the injector and by the control signal causing the injector to open the valve system for flow of lubricant from the lubricant feed conduit through the lubricant inlet, through the valve system, and into a conduit that flow-connects the valve system with the outlet-valve system.

It is noted that the pressure of the lubricant in the lubricant feed conduit is above the predetermined limit that determines the opening of the outlet-valve system in order for the lubricant feed conduit to provide lubricant through the valve system with a pressure sufficiently high to open the outlet-valve system in the injection-phase. Accordingly, the lubricant flow through the valve system and into the conduit between the valve system and the outlet-valve system causes a pressure rise at the outlet-valve system, causing the outlet-valve system to open for flow of lubricant from the conduit to the nozzle aperture by which lubricant is injected into the cylinder through the nozzle aperture. At the end of the lubrication period, the electrical control signal from the controller is changed, causing the valve system to close again for lubricant supply from the lubricant inlet to the nozzle aperture. The pressure in the conduit decreases again, and the outlet-valve system closes.

In these embodiments, there are at least two valve systems in the injector. The valve system is regulated under control by the controller, for example by electrical signals from the controller, and the outlet-valve system is activated only by the elevated pressure of the lubricant at the outlet-valve system, once the valve system has opened and caused flow of lubricant at elevated pressure from the lubricant feed conduit to the outlet-valve system. There is no mechanical connection that couples the movable parts of the valve system with movable parts of the outlet-valve system. Coupling between the opening and closing of these two systems is done only by the lubricant that flows from the valve system to the outlet-valve system.

### Optional details of valve and actuator

In some practical embodiments, the valve system comprises a movable, actuator-driven valve member arranged for moving from an idle-phase position, in which the valve member in the idle-phase blocks the flow path, to an injection-phase position, in which the valve member opens the flow path for flow of lubricant through the flow path in the injection-phase. Advantageously, the valve member is pre-stressed towards an idle-phase position by a valve spring.

In some embodiments, for driving the movable valve member, the injector comprises a movable and actuator-driven rigid actuator-extension that is connecting the actuator with the valve system and which is used by the actuator for displacing or rotating the valve member from an idle-phase position, in which the valve member blocks the flow path, to an injection-phase position, in which the valve member opens the flow path for flow of a lubricant through the flow path for injection of the lubricant into the cylinder in an injection-phase.

Optionally, the actuator-driven rigid actuator-extension is a pull-push-member for selectively pulling or pushing the valve member in the injection. Alternatively, the actuator extension is a rotational member transferring the driving force from a rotational actuator for example selectively in one direction or the other.

In some embodiment, the actuator is an electrically controlled actuator, for example an electromechanical actuator. Optionally, the actuator comprises an electrical solenoid arrangement with a stationary solenoid part and a movable solenoid part and wherein the actuator-extension is connected to the movable solenoid part for being driven by electrical excitation of the solenoid, wherein the solenoid is configured for excitation by the injection-phase signals from the controller.

For example, the valve system comprises a linear actuator for driving the actuator-extension. In this case, the actuator-extension is connected to the actuator, for example to an arrangement of a solenoid-plunger and solenoid coil, for upon electrical activation of the actuator to drive the actuator-extension, for example pull-push-member for open for flow from the lubricant inlet. Optionally, the actuator-extension is connected to the solenoid-plunger, whereas the solenoid coil is stationary in the injector. Alternatively, the actuator-extension is connected to the solenoid coil, which is movable together with the actuator-extension.

As alternative, piezo-electric elements can be used for driving the valve member. Such elements are electrically or wireless connected to the controller for being controlled by the controller with respect to when to contract or expand.

In some concrete embodiments, the valve member is cylindrical and comprises a stationary valve member, which, in turn, comprises a corresponding cylindrical bushing inside which the cylindrical valve member is arranged for displacement along a longitudinal axis of the bushing or arranged for rotation about longitudinal axis of the bushing.

The term cylindrical bushing is used for describing that the bushing has a cylindrical hollow, typically but not necessarily with a circular cross section. The cylindrical valve member fits tightly into the cylindrical hollow of the bushing so that no lubricant can flow between the cylindrical valve member and the cylindrical bushing apart from a potential minimal amount that is only lubricating the valve member inside the bushing and which is negligible as compared to the amount of lubricant injected into the cylinder.

### System advantages

The system as described herein has a number of advantages.

By providing a valve system, and optionally and outlet-valve system, inside the injector, the mass of movable members that has to be moved during operation is low. The low mass reduces reaction time of the movable objects as compared to prior art systems, why the system implies an increased reaction speed and corresponding precision with respect to timing and amount.

As the injector has a length that is typically in the order of less than a few times, for example two times, the thickness of the cylinder wall of such large engine and is extending through an opening in the cylinder wall, the distance from the valve system to the nozzle aperture is typically in the order of the thickness of the cylinder wall or even less. For example, the distance from the valve system to the nozzle aperture is less than 20 cm or even less than 10 cm, which is much shorter than the distance of several meters between a valve and the nozzle in the prior art. This implies that the distance from the valve system to the nozzle exit is extremely short in comparison and the valve system has correspondingly short reaction times and precision.

Due to the valve system being inside the injector housing and close to the nozzle, the injector has a short reaction time such that high precision can be achieved for injection timing and time length, the latter translating into volume for injection. Due to the high timing precision and the fast reaction time, the lubricant injection in a single injection-cycle can be done with multiple partial injections. As the injector as described above only has a short and rigid flow channel from the valve system to the nozzle, for example including an outlet-valve system, uncertainties and imprecisions of the injection amount and the timing are minimized in that minute compression and expansion of the oil in the relatively long conduits are avoided as well as expansion of the conduits themselves.

For example, in the time span before the piston of the engine passes the injectors, a double injection can be made so that two types of lubricant may be mixed in the cylinder, especially when using the SIP principle.

The system may only need a single lubricant line to the injectors for lubricant, as there is no need for a return line, which minimizes costs and efforts for installation and minimizes the risk for faults. This is especially so because the engines are large and would require return lines of several meters length. Also, imprecision in time a volume when closing the valve due to dead volume in a potentially return pipe for the lubricant is avoided.

Due to the outlet-valve system with the no-return valve, injectors are stable against high pressure from the cylinder. In case that the outlet-valve system comprises a non-return valve in or at the nozzle, and the non-return valve comprises a valve member, for example ball, which is spring pressed against a valve seat, a high degree of robustness against failure has been observed. These systems are simple, and the risk for clogging is minimal. Also, the valve seats tend to be self-cleaning and subject to little uneven wear, especially for valve members being balls, why a high and long-term reliability is provided. Accordingly, the injector is simple and reliable, quick and precise, and easy to construct from standard components with low production costs.

As a conclusion, the specific valve system is acting fast due to its light-weight components. Furthermore, the components are relatively simple in construction and imply low production costs. In addition to these advantages, the valve system is reliable, robust, and has a low risk for clogging. As the components are subject to relatively small pressure load, the valve system also has a long lifetime.

### Optional parameters

For example, the injectors comprise a nozzle with a nozzle aperture that has a diameter D if the nozzle is circular, or wherein the nozzle has an equivalent diameter D which is two times the square root of the nozzle aperture area divided by pi if the nozzle is not circular; wherein the diameter D is at least 0.1 mm, and are configured for ejecting a spray of atomized droplets, which is also called a mist of oil.

A spray of atomized droplets is important in SIP lubrication, where the sprays of lubricant are repeatedly injected by the injectors into the scavenging air inside the cylinder prior to the piston passing the injectors in its movement towards the TDC. In the scavenging air, the atomized droplets are diffused and distributed onto the cylinder wall, as they are transported in a direction towards the TDC due to a swirling motion of the scavenging air towards the TDC. The atomization of the spray is due to highly pressurized lubricant in the lubricant injector at the nozzle. The pressure is higher than 10 bar, typically between 25 bar and 100 bar for this high-pressure injection. An example is an interval of between 30 and 80 bar, optionally between 35 and 60 bar. The injection time is short, typically in the order of 5-30 milliseconds (msec). However, the injection time can be adjusted to 1 msec or even less than 1 msec, for example down to 0.1 msec. Therefore, imprecisions of only a few msec may alter the injection profile detrimentally, why high precision is required, as already mentioned above, for example a precision of 0.1 msec.

Also, the viscosity influences the atomization. Lubricants used in marine engines, typically, have a typical kinematic viscosity of about 220 cSt at 40°C and 20 cSt at 100°C, which translates into a dynamic viscosity of between 202 and 37 mPa·s. An example of a useful lubricant is the high performance, marine diesel engine cylinder oil ExxonMobil^{®} Mobilgard^{™} 570VS (or 560VS which is being phased out). Other lubricants useful for marine engines are other Mobilgard^{™} oils as well as Castrol^{®} Cyltech oils. Commonly used lubricants for marine engines have largely identical viscosity profiles in the range of 40-100°C and are all useful for atomization, for example when having a nozzle aperture diameter of 0.1-0.8 mm, and the lubricant has a pressure of 30-80 bar at the aperture and a temperature in the region of 30-100°C or 40-100°C. See also, the published article on this subject by Rathesan Ravendran, Peter Jensen, Jesper de Claville Christiansen, Benny Endelt, Erik Appel Jensen, (2017) "Rheological behaviour of lubrication oils used in two-stroke marine engines", Industrial Lubrication and Tribology, Vol. 69 Issue: 5, pp.750-753, https://doi.org/10.1108/ILT-03-2016-0075.

### SHORT DESCRIPTION OF THE DRAWINGS

The invention will be explained in more detail with reference to the drawing, where
- Fig 1: is a sketch of part of a cylinder in a first embodiment of an engine according to the present invention,
- Fig 2: is a drawing of an embodiment of the injector illustrated in Fig. 1,
- Fig. 3a: is a sketch of a first embodiment of a controller illustrated in Fig. 1 in greater details,
- Fig. 3b: is a sketch of a second embodiment of a controller illustrated in Fig. 1 in greater details,
- Fig. 4: is a sketch illustrating a further embodiment of a nozzle for the injector illustrated in Fig. 2,
- Fig. 5: is a sketch corresponding to Fig. 1 of part of a cylinder in a further embodiment of an engine according to the present invention,
- Fig. 6: is a sketch of an embodiment of the injector illustrated in Fig. 5,
- Fig. 7: is an enlarged section of the inlet-valve housing of the injector illustrated in Fig. 6,
- Fig. 8: is a sketch corresponding to Fig. 1 of part of a cylinder in a further embodiment of an engine according to the present invention,
- Fig. 9: is a diagram for regulating and calibration of the injectors,
- Fig. 10: illustrates a control strategy for regulating lubricant amount and
- Fig. 11: illustrates difference between calibrated and un-calibrated injectors.

### DETAILED DESCRIPTION / PREFERRED EMBODIMENT

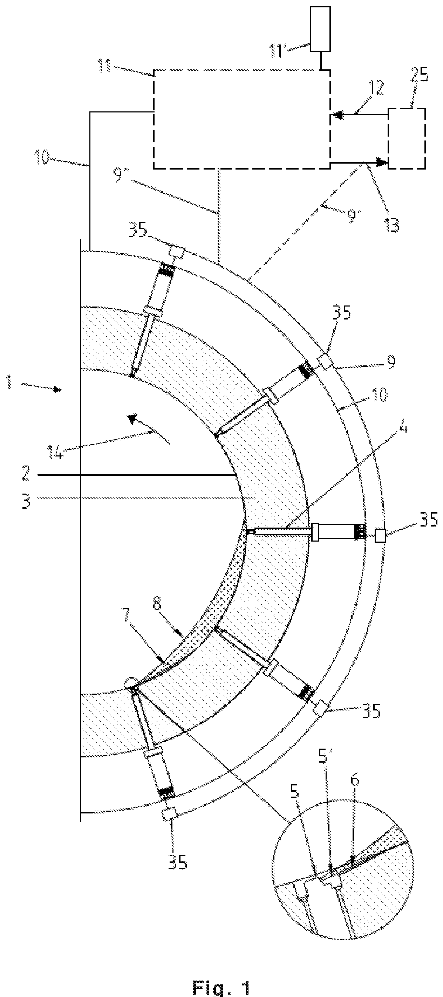

FIG. 1 illustrates one half of a cylinder 1 of a large slow-running two-stroke engine, for example marine diesel engine. The cylinder 1 comprises a cylinder liner 2 on the inner side of the cylinder wall 3. Inside the cylinder wall 3, there are provided a plurality of injectors 4 for injection of lubricant into the cylinder 1. As illustrated, the injectors 4 are distributed along a circle with the same angular distance between adjacent injectors 4, although this is not strictly necessary. Also, the arrangement along a circle is not necessary, seeing that an arrangement with axially shifted injectors is also possible, for example every second injector shifted towards the piston's top dead centre (TDC) relatively to a neighbouring injector.

Each of the injectors 4 has a nozzle 5 with a nozzle aperture 5' from which a fine atomized spray 8 with miniature droplets 7 is ejected under high pressure into the cylinder 1.

For example, the nozzle aperture 5' has a diameter of between 0.1 and 0.8 mm, such as between 0.2 and 0.5 mm, which at a pressure of 10-100 bars, for example 25 to 100 bars, optionally 30 to 80 bars or even 50 to 80 bars, atomizes the lubricant into a fine spray 8, which is in contrast to a compact jet of lubricant. The swirl 14 of the scavenging air in the cylinder 1 transports and presses the spray 8 against the cylinder liner 2 such that an even distribution of lubrication oil on the cylinder liner 2 is achieved. This lubrication system is known in the field as Swirl Injection Principle, SIP.

However, also other principles are envisaged in connection with the improved lubrication system, for example injectors that have jets directed towards the cylinder liner.

Optionally, the cylinder liner 2 is provided with free outs 6 for providing adequate space for the spray 8 or jet from the injector 4.

In addition to the lubricant feed conduit 9, the injectors 4 are connected to the controller 11 by a pressure-control conduit 10. The lubricant feed conduit 9 is used for providing lubricant for injection. The pressure-control conduit 10 provides oil at high pressure to activate an internal pumping system inside the injector 4, which will be explained in more detail in the following.

The pressure in the pressure-control conduit 10 is higher than the pressure in the lubricant feed conduit 9. Typically, the lubricant pressure in the lubricant feed conduit 9 is in the range of 1-15 bar, for example in the range of 5-15 bar, and the oil pressure in the pressure-control conduit 10 is in the range 20-100 bar, for example in the range 30-80 bar, optionally 50-80 bar.

The controller 11 is connected to a supply conduit 12 for receiving lubricant from a lubricant supply 25, including an oil pump, and a return conduit 13 for return of lubricant, typically to an oil reservoir, optionally for recirculation of lubricant. The lubricant pressure in the supply conduit 12 is higher than the pressure in the return conduit 13, for example at least two times higher.

The controller 11 supplies lubrication oil to the injectors 4 in precisely timed pulses, synchronised with the piston motion in the cylinder 1 of the engine. For example, for the synchronisation, the controller system 11 is electronically by wires or wireless connected to a computer 11' which controls components in the controller 11 for the lubrication supply. Potentially, the computer 11' is part of the controller 11, for example provided inside a single casing with the other components of the controller 11. Optionally, the computer monitors parameters for the actual state and motion of the engine, for example speed, load, and position of the crankshaft, the latter revealing the position of the pistons in the cylinders.

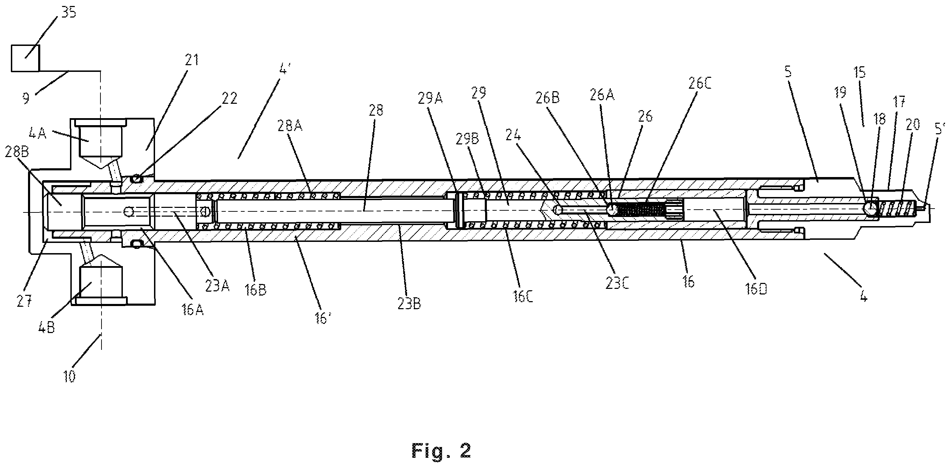

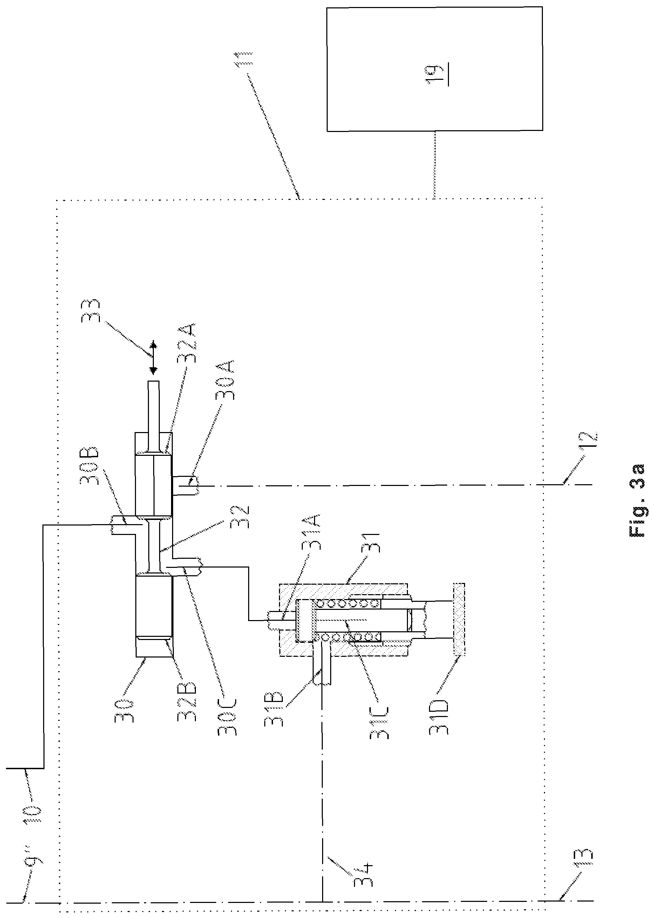

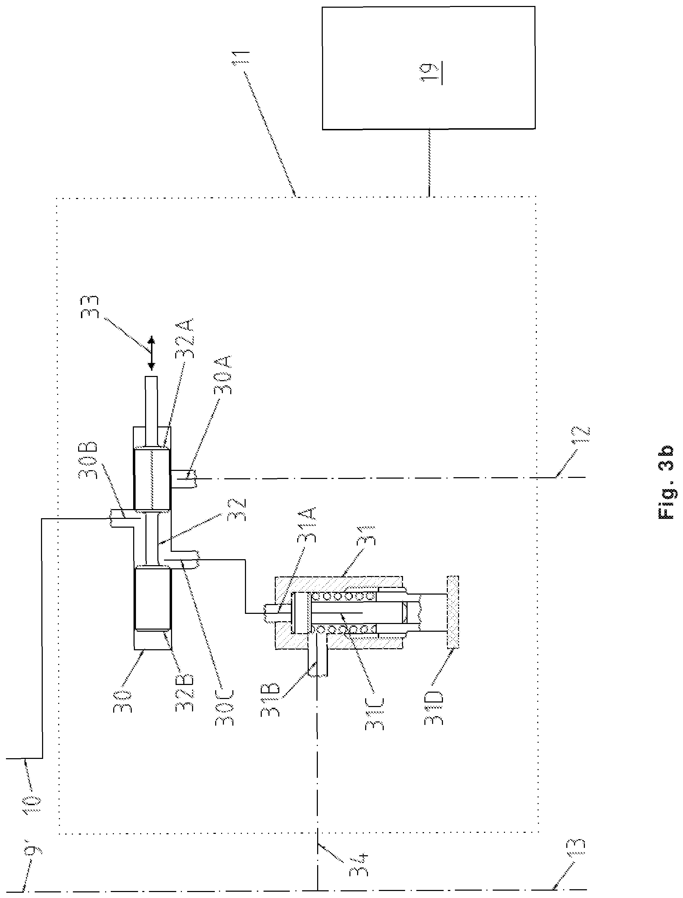

FIG. 2 illustrates an injector 4, and FIG. 3a and 3b illustrate some potential embodiments of the controller 11 in greater detail. The dimensions are not to scale.

The injector 4 comprises an injector housing 4' with an injector base 21 having a lubricant inlet port 4A for receiving lubricant from the lubricant feed conduit 9 and a pressure port 4B connected to the pressure-control conduit 10 for causing ejection of lubricant by the injector 4.

A flow chamber 16, as part of the injector housing 4', holds the nozzle 5 relatively to the injector base 21. In the shown embodiment, the flow chamber 16 is provided as a hollow rigid rod. The flow chamber 16 is sealed against the injector base 21 by an O-ring 22 and held tightly against the injector base 21. A conduit 16' is provided as a hollow channel inside the flow chamber 16 from the rear to the front of the flow chamber 16. The conduit 16' communicates with the lubricant inlet port 4A and with the nozzle 5 through a rear chamber 16A, a first intermediate chamber 16B, a second intermediate chamber 16C, and front chamber 16D.

The injector 4 also comprises an outlet-valve system 15 for regulating the lubricant that is dispensed through the nozzle aperture 5'. Only if the pressure exceeds a predetermined pressure at the outlet-valve system 15, the outlet-valve system 15 opens for ejection of the lubricant into the cylinder 1 of the engine. In the embodiment of FIG. 2, the outlet-valve system 15 is exemplified as being part of the nozzle 5, although, this is not strictly necessary.

The outlet-valve system 15 comprises an outlet non-return outlet-valve 17. In the outlet non-return outlet-valve 17, an outlet-valve member 18, exemplified as a ball, is pre-stressed by a spring-load against an outlet-valve seat 19 by an outlet-valve spring 20. Upon provision of pressurised lubricant in the front chamber 16D, the pre-stressed force of the outlet-valve spring 20 is counteracted by the lubricant pressure, and when the pressure gets higher than the spring force, the outlet-valve member 18 is displaced from its outlet-valve seat 19, and the outlet non-return outlet-valve 17 opens for injection of lubricant through the nozzle aperture 5' into the cylinder 1.

As exemplified, the outlet-valve spring 20 acts on the valve member 18 in a direction away from the nozzle aperture 5'. However, the configuration could be different with respect to the direction of the force of the outlet-valve spring 20 on the outlet-valve member 18 relatively to the nozzle aperture 5', as long as the non-return outlet-valve 17 is closing for the supply of lubricant to the nozzle aperture 5' when in an idle state between injection phases. The closing of the non-return outlet-valve 17 in an idle state prevents unintended flow of lubricant from the front chamber 16D through the nozzle aperture 5' into the cylinder 1 between injection phases.

The rear chamber 16A communicates with the inlet port 4A for receiving lubricant from the lubricant feed conduit 9. The rear chamber 16A communicates with the first intermediate chamber 16B through rear channel 23A. The first intermediate chamber 16B communicates with the second intermediate chamber 16C through intermediate channel 23B, which is a cylindrical opening around an actuator-member 28, which will be explained below. The second intermediate chamber 16C communicates with the front chamber 16D through front channel 23C.

For sake of convenience, the term "forward motion" is used for motion towards the nozzle aperture 5' and the oppositely directed motion away from the nozzle aperture 5' is called "rearward motion".

The front chamber 16D is emptied through the nozzle aperture 5' by forward motion of a reciprocal plunger-member 29, which is spring-loaded against the forward motion by a helical plunger spring 29B in the second intermediate chamber 16C. The plunger-member 29 comprises a channel inlet 24 that leads into front channel 23C, which is an internal channel in the plunger-member 29, for example centrally in the plunger-member 29, as indicated. During forward motion of the plunger-member 29, the front channel 23C is closed by a non-return plunger-valve 26. In the shown embodiment, the non-return plunger-valve 26 is exemplified as comprising a plunger-valve ball 26A in a plunger-valve seat 26B, against which the plunger-valve ball 26A is pre-stressed by a plunger-valve spring 26C.

Forward motion of the plunger-member 29 is achieved by forward motion of an actuator-member 28, which presses against the head 29A of the plunger-member 29. The actuator-member 28 is pre-stressed in a rearward direction by a helical actuator-spring 28A in the first intermediate chamber 16B.

In this illustrated exemplary embodiment, the actuator-member 28 and the plunger-member 29 are separate elements, however, they could also be combined as a single actuator-plunger, for example by having the actuator-member 28 at one end of the single element and the plunger-member 29 at the opposite end.

Forward motion of the actuator-member 28 is achieved by pressurized lubricant from the pressure-control port 4B, which presses on the rear part 28B of the actuator-member 28 in pressure chamber 27 so that they move together.

The functioning of the injector 4 is explained in the following in greater detail. When the pressure-control port 4B is provided with pressurized oil, for example in the pressure range of 20-100 bar, the pressurized oil expands the volume of the pressure chamber 27 by pushing on the rear part 28B of the actuator-member 28 and moving the actuator-member 28 forward. As the actuator-member 28 presses against the head 29A of the plunger-member 29, the plunger-member 29 moves forward together with the actuator-member 28 against the force of the actuator-spring 28A and the plunger spring 29B. The forward motion of the plunger-member acts on the lubricant in the front chamber 16D. As the non-return valve 26 prevents the lubricant in the front chamber 16D from escaping backwards, the lubricant in the front chamber 16D is pressurised to the predetermined pressure limit at which the outlet-valve-system system 15 with the non-return outlet-valve 17 opens for ejection of the lubricant from the front chamber 16D through the nozzle aperture 5' into the cylinder 1.

At the end of the injection phase, the oil at the pressure-control port 4B is drained, which causes the actuator-spring 28A and the plunger spring 29B to press back the actuator-member 28 and the plunger-member 29 in a direction away from the nozzle 5. The rearward motion of the plunger-member 29 reduces the pressure in the front chamber 16D, which, in turn, closes the non-return outlet-valve 17 and draws lubricant from the second intermediate chamber 16C through front channel 23C into the front chamber 16D, as the plunger non-return valve 26 is opened by the pressure reduction in the front chamber 16D. This way, the non-return plunger-valve 26 acts as a suction valve because the pressure reduction in the front chamber 16D causes refilling of the front chamber 16D with lubricant by suction through the non-return plunger-valve 26. During this returning motion of the actuator-member 28 and plunger-member 29, lubricant in the second intermediate chamber 16C is replenished from the first intermediate chamber 16B, which is turn is filled by lubricant from the rear chamber 16A that received the lubricant through the lubricant inlet port 4A.

For proper functioning, the lubricant inlet port 4a is provided with lubricant from the lubricant feed conduit 9 at a constant pressure, and the pressure-control port 4B is provided with pressure-oil from the pressure-control conduit 10 intermittently for each injection-cycle. The pressure at the pressure-control port 4B is raised in the injection phase and reduced in the idle state between injection phases.

If the forward force on the actuator-member 28 by the oil pressure in the pressure chamber 27 in the idle state is less than the combined rearward forces from the actuator spring 28A and the plunger spring 29B, the actuator-member 28 and the plunger-member 29 are returned fully to their most rearward possible position, which is the one indicated in FIG. 2. Thus, a full stroke of the plunger-member is achieved by intermittently changing the oil pressure at the pressure-control port 4B between a full pressure and a lower pressure, for example at the pressure of the lubricant in the lubricant supply line 9 or even lower.

However, the actuator-member 28 and the plunger-member 29 can be held offset from the most rearward position by adjusting the pressure at the pressure-control port 4B and in the pressure chamber 27 at an offset pressure level that creates a force on the actuator such that the springs 28A and 29B do not fully elongate during rearward motion of the actuator-member 28 and the plunger-member 29 but are kept slightly compressed. This is possible because the force of the springs 28A and 29B is varying in dependence on the compression length, largely following a linear dependence on the displacement of the actuator-member from the most rearward position. The offset pressure level is smaller than the pressure level necessary to cause the non-return outlet-valve 17 to open for injection.

In principle, the injector 4 can be provided with lubricant at the inlet port 4A from one lubricant source and with pressure-oil or other pressure-liquid from an entirely different source. However, typically, for sake of simplification and convenience, the pressure-oil at the pressure-control port 4B is provided from the same source as the lubricant at the inlet port 4A, however, with increased pressure, for example by use of a pressure intensifier.

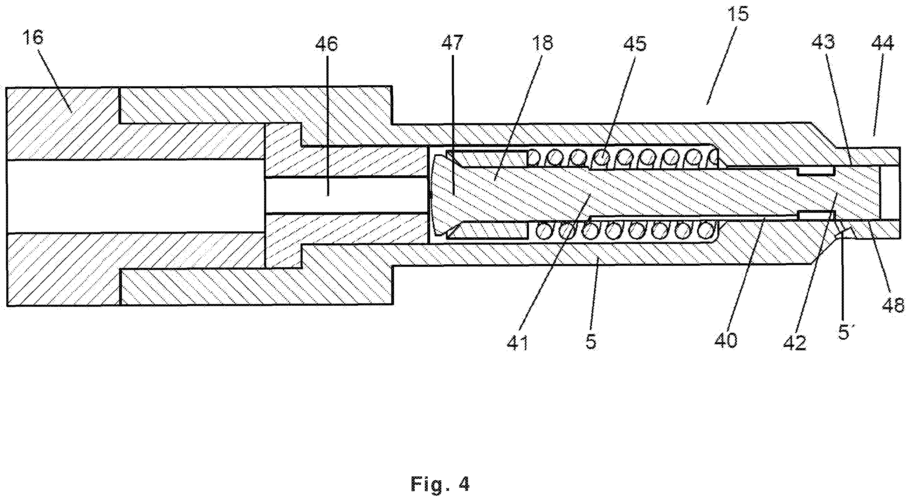

An illustrative example of how the intermittent pressure change at the pressure-control port 4B is achieved is explained in the following with reference to the controller 11, which is illustrated in FIG. 3a and in an alternative embodiment in FIG. 3b. It is pointed out however, that the controllers in FIG. 3a and 3b are only exemplified embodiments, and the injector of FIG. 2 is independent of the illustrated controller 11 of FIG. 3 and 4 and can function with other types of controllers.

In the example of FIG. 3a, the controller 11 comprises a toggle valve 30 that has a toggle-valve inlet port 30A, which is connected to the supply conduit 12, a toggle-valve outlet port 30B, which is connected to the pressure-control conduit 10 for communication with the injector's pressure-control port 4B, and a toggle-valve return port 30C, which is connected to the return conduit 13. Between the toggle-valve return port 30C and the return conduit 13, there is illustrated a pressure-control valve 31, which is explained in greater detail below, and which is optional.

The toggle-valve 30 comprises a first toggle closure element 32A and a second toggle closure element 32B, which are arranged rigidly connected and reciprocal between a first state, where the toggle-valve inlet port 30A and the toggle-valve outlet port 30B are communicating, and a second state, where the toggle-valve outlet port 30B and the toggle-valve return port 30C are communicating. The reciprocal movement is illustrated by arrow 33. In FIG. 3a and 3b, only the second state is illustrated. For example, the toggle-valve 30 is a three-way valve, as illustrated, potentially a magnetic valve.

In the injection phase, the toggle-valve 30 is in the first state, where the highly-pressurised lubricant from the supply conduit 12 is supplied to the pressure-control port 4B of the injector 4 in order to press the actuator-member 29 forward to cause injection of lubricant into the cylinder 1. At the end of the injection phase, the toggle member 30 is moved to the second state, as illustrated, and the lubricant from the pressure-control port 4B is drained through the toggle valve 30, out of the toggle-valve return port 30C into the return line 13, which allows the actuator-member 28 and the plunger-member 29 to return back to the idle state. For example, the toggling of the toggle-member 32 is controlled in cooperation with the computer 11'.

As the injector 4 comprises a pumping system upstream of the nozzle 5, namely the plunger-member 29, the lubricant supplied for injection does not need to be provided at high pressure in the feed conduit 9. Therefore, the pressure of the return conduit 13, typically in the range of 5-15 bar, is sufficient for supplying lubricant through the feed conduit 9 to the inlet port 4A of the injector 4.

An optional injection volume-adjustment mechanism is also illustrated in FIG. 2 in combination with FIG. 3a and 3b. In this embodiment, a pressure-valve 31 is provided with a pressure-valve inlet port 31A, connected to the toggle-valve return port 30C, and a pressure-valve outlet port 31B, connected to the return conduit 13. This implies that the toggle-valve return port 31B is connected to the return conduit 13 only through the pressure-valve 31, which is used to adjust the return pressure at the toggle-valve return port 30C.

In the exemplified embodiment, the pressure-valve 31 comprises a spring-loaded pressure adjustment member 31C, the pre-tension of which is adjustable by a pre-tensioner 31D, for example a screw, as illustrated. Although, it is possible to configure the pre-tensioner for manual adjustment, typically, the pre-tensioner is adjusted by a motor or other type of actuator. The adjustment of the pre-tensioner causes more or less pre-tension on the spring-loaded pressure adjustment member 31C, such that the back-pressure at the pressure-valve inlet port 31A and at the toggle-valve return port 30C is adjusted by this pre-tension.

The adjusted back pressure at the toggle-valve return port 30C determines the lowest pressure at the pressure-control port 4B. Increasing this back-pressure offsets the actuator-member 28 and the plunger-member 29 from the most rearward position. As the next injection phase starts the forward motion from this offset position, the stroke of the plunger-member 29 is shorter that it would be when starting from the most rearward position. Thus, by adjusting the back-pressure by the pressure-valve 31, the stroke of the injector 4 is precisely regulated, and correspondingly the amount of the lubricant that is injected into the cylinder 1. In FIG. 2, the most rearward position of the actuator-member 28 and the plunger-member 29 is indicated.

Typically, there is provided one toggle-valve 30 for a group of injectors, for example all injectors of a cylinder. However, in an alternative embodiment, there is provided one toggle-valve 30 for each injector 4. In case that the optional pressure-valve 31 is included in the system in order to adjust the stroke of the plunger-member 29 and the injection volume, it is, typically, provided for a group of injectors 4. However, it is also possible to provide one pressure-valve 31 for each injector 4.

As it appears from the above example, the lubricant feed conduit 9 is communicating with the return line 13. In the illustration of FIG. 3a, the return conduit 13 is entering the controller 11, and the feed conduit 9'' is exiting the controller 11. This is also illustrated in FIG. 1 by the solid line 9'' which in extension is connected to the feed conduit 9. In case of the controller 11 being an add-on unit, the controller 11 would have at least 4 conduit connectors.

However, this need not be so. Optionally, the controller 11 comprises a return exit line 34 which is connected to the return conduit 13, as illustrated in FIG.3b. In the latter case, the return conduit 13 is directly communicating with the feed conduit 9' and 9. This embodiment is illustrated in FIG. 1 by the dotted alternative line 9', which in extension is connected to the feed conduit 9. In this case, the return conduit 13 in extension of the feed conduit 9 and 9' provides lubricant directly to the lubricant inlet port 4A of the injectors 4 for injection into the cylinder, and the controller 11 is bypassed.

FIG. 4 illustrates a second, alternative embodiment of an outlet-valve system 15. The generalised principle of the outlet-valve system 15 is similar to the one disclosed in WO2014/048438. This reference also provides additional technical details as well as explanations to the functioning of the injector presented here, which are not repeated here, for convenience. A nozzle aperture 5' is provided in the nozzle 5 tip for ejection of lubrication oil. Inside a cavity 40 of the nozzle 5, an outlet-valve member 18 is provided, the outlet-valve member 18 comprising a stem 41 and a cylindrical sealing head 42 which is arranged slidingly in a cylindrical cavity part 43 at the nozzle tip 44. The position of the valve member 18 is pre-stressed backwards away from the nozzle tip 44 by a spring 45 and is offset forwards by oil pressure acting through a channel 46 upon the back part 47 of the stem 41, the oil pressure acting against the spring force. The nozzle aperture 5' is sealingly covered by the sealing head 42 which abuts the cylindrical cavity part 43 at the nozzle tip 44, unless the valve member 18 is pushed forward such that the sealing head 43 slides pass and away from the nozzle aperture 5' to allow lubricant oil to flow from the inner cavity 46 through the nozzle aperture 5' for ejection.

The following values are non-limiting illustrative examples of possible working pressures. The pressure in the return conduit 13 and the feed conduit 9 is 10 bar. The pressure in the supply conduit 12 is 40 bars. The outlet-valve 15 opens at 37 bar, such that the lubricant is injected at 37 bars. The springs 28A and 29B are configured for pressing the plunger-member 29 and the actuator-member 28 fully back to the rearmost position if the pressure at the pressure-control port 4B in the idle state between injection phases is 10 bar. The pressure-valve is adjustable to a pressure of between 10 and 30 bars, for example 20 bar, well below the 37 bar injection pressure but high enough to provide high enough pressure in the pressure chamber 27 for the actuator-member 28 not returning fully to the most rearward position but keeping a distance from the most rearward. By adjusting this distance through adjustment of the pressure in the range of 10-30 bar, the injection volume in the front chamber 16D is adjusted, because the forward motion in the injection phase is smaller the more the plunger-member 29 is offset from the most rearward position at the start of the injection phase.

Optionally the injection volume is controlled by a flowmeter inserted in the feed line 9, either for the group of injectors or for each single injector 4. The flowmeter measures flow (mass and/or volume) and is then used for control that the injector(s) is/are properly working.

The injection system with the injector 4 as described above and the controller 11 are simple to install and replace. It is a relatively low-cost technical solution, albeit robust and stable. Especially, the injection volume is precisely adjustable. Also, the system does not comprise electrical wires to and from the injector 4, which makes it robust against heat, whereas electrical wires are likely to have an insulation layer that melts in heat.

The above-described embodiments are known from WO 2019/114905. However, the engine differs as it comprises a flowmeter 35. The flowmeter shall be used for measuring the lubricant flow in the lubricant feed conduit 9.

The signal from the flowmeter for the actual flow is then transformed in the controller into an actual amount. The calculated actual amount is compared to the desired value, and the controller then controls the injectors and adjust the setting thereof in order to regulate the amount to the desired value for lubricant amount to be injected for a specific operation mode.

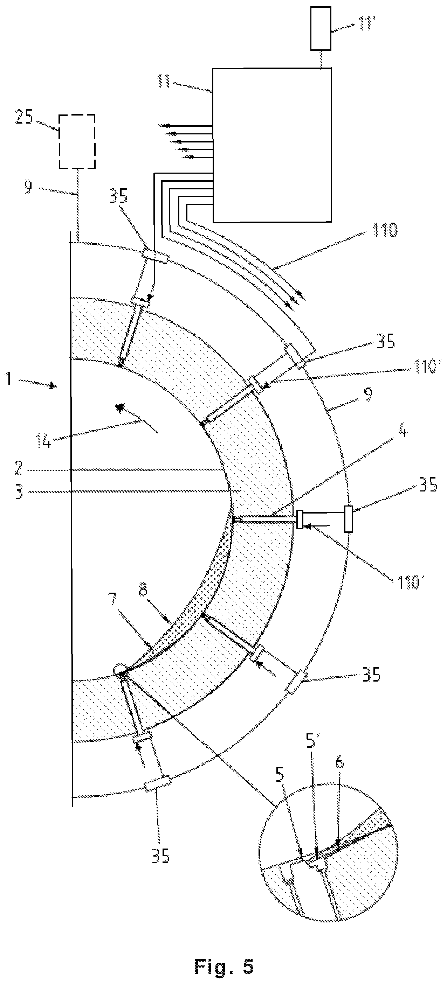

FIG. 5 illustrates one half of a cylinder 1 of a large slow-running two-stroke engine, for example marine diesel engine. The cylinder 1 comprises a cylinder liner 2 on the inner side of the cylinder wall 3. Inside the cylinder wall 3, there are provided a plurality of injectors 4 for injection of lubricant into the cylinder 1. As illustrated, the injectors 4 are distributed along a circle with the same angular distance between adjacent injectors 4, although this is not strictly necessary. Also, the arrangement along a circle is not necessary, seeing that an arrangement with axially shifted injectors is also possible, for example every second injector shifted towards the piston's top dead centre (TDC) relatively to a neighbouring injector.

Each of the injectors 4 has a nozzle 5 with a nozzle aperture 5' from which a fine atomized spray 8 is ejected under high pressure into the cylinder 1.

For example, the nozzle aperture 5' has a diameter of between 0.1 and 0.8 mm, such as between 0.2 and 0.5 mm, which at a pressure of 10-100 bars, for example 25 to 100 bars, optionally 30 to 80 bars or even 50 to 80 bars, atomizes the lubricant into a fine spray 8, which is in contrast to a compact jet of lubricant. The swirl 14 of the scavenging air in the cylinder 1 transports and presses the spray 8 against the cylinder liner 2 such that an even distribution of lubrication oil on the cylinder liner 2 is achieved. This lubrication system is known in the field as Swirl Injection Principle, SIP.

However, also other principles are envisaged in connection with the improved lubrication system, for example injectors that have jets directed towards the cylinder liner.

Optionally, the cylinder liner 2 is provided with free outs 6 for providing adequate space for the spray 8 or jet from the injector 4.

The injectors 4 receive lubrication oil through a feed conduit 9, typically through a common feed conduit 9, from a lubricant supply 25, for example oil circuit, of the engine including a potential lubricant pump that raises the pressure of the lubricant to an adequate level. For example, the pressure in the feed conduit 9 is in the range of 25 to 100 bars, optionally 30 to 80 bars, which is a typical range of pressure for SIP injectors.

The injectors 4 are provided with electrical connectors 110' that are electrically communicating with a controller 11 through electrical cables 110. As mentioned earlier the injectors may alternatively be wireless communicating with the controller 11. The controller 11 sends electrical control signals to the injectors 4 for controlling injection of lubricant by the injector 4 through the nozzle 5. As it is illustrated, one cable 110 is provided for each injector 4, which allows individual control of injection by the respective injector. However, it is also possible to provide one electrical cable 110 from the controller 11 to all injectors 4 such that all injectors 4 are injecting simultaneously upon receiving an electrical control signal through one single electrical cable. Alternatively, it is also possible to provide one electrical cable 110 from the controller 11 to a subgroup of injectors, for example a subgroup of 2, 3, 4, 5 or 6 injectors, such that a first subgroup is controlled by the controller through a first cable 10 and a second subgroup is controlled through a second cable 110. The number of cables and subgroups are selective dependent on preferred configurations.

A flowmeter 35 is connected with the lubricant feed conduit 9 and the electrical cables 110 and is arranged for measuring the lubricant flow to each injector 4 or to each subgroup of injectors.

The electrical control signals from the controller 11 to the injectors 4 are provided in precisely timed pulses, synchronised with the piston motion in the cylinder 1 of the engine. For example, for the synchronisation, the controller system 11 comprises a computer 11' or is electronically connected a computer 11', by wires or wireless, where the computer 11' monitors parameters for the actual state and motion of the engine, for example speed, load, and position of the crankshaft, where the latter reveals the position of the pistons in the cylinders.

The above-described embodiment is known from WO 2019/114903. However, the engine differs as it comprises the flowmeter 35. The flowmeter shall be used for measuring the lubricant flow in the lubricant feed conduit 9.

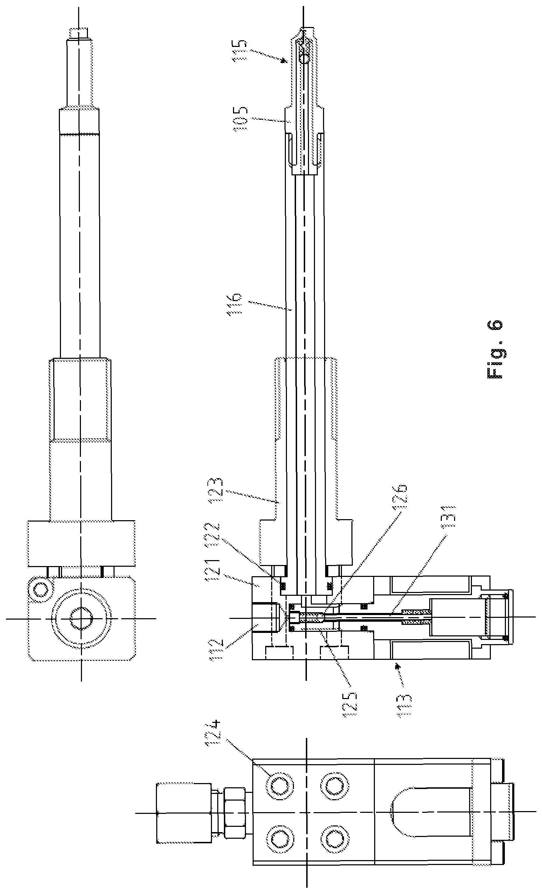

Fig. 6 illustrates principal sketches of an injector 4. Fig. 6 is an overview sketch with three different views of the exemplified injector, top view, end view and cross-sectional side view.

The injector 4 comprises a lubricant inlet port 112 for receiving lubricant from the lubricant feed conduit 9. The inlet port 112 is provided in an inlet-valve housing 121 comprising an inlet-valve system 113 communicating with the inlet port 112 for regulating the amount of lubricant received from the lubricant feed conduit 9 during a lubrication phase. The injector 4 also comprising an outlet-valve system 115 for regulating the lubricant that is dispensed through the nozzle aperture 5'. A rigid flow chamber 116 connects the inlet-valve system 113 with the outlet-valve system 115 for flow of lubricant to the nozzle 5. In the shown embodiment, the flow chamber 116 is provided as a hollow rigid rod. The flow chamber 116 is sealed against the inlet-valve housing 121 of the inlet-valve system 113 by an O-ring 122 and held tightly against the inlet-valve housing 121 by a flange 123 that is bolted by bolts 124 against the inlet-valve housing 121.

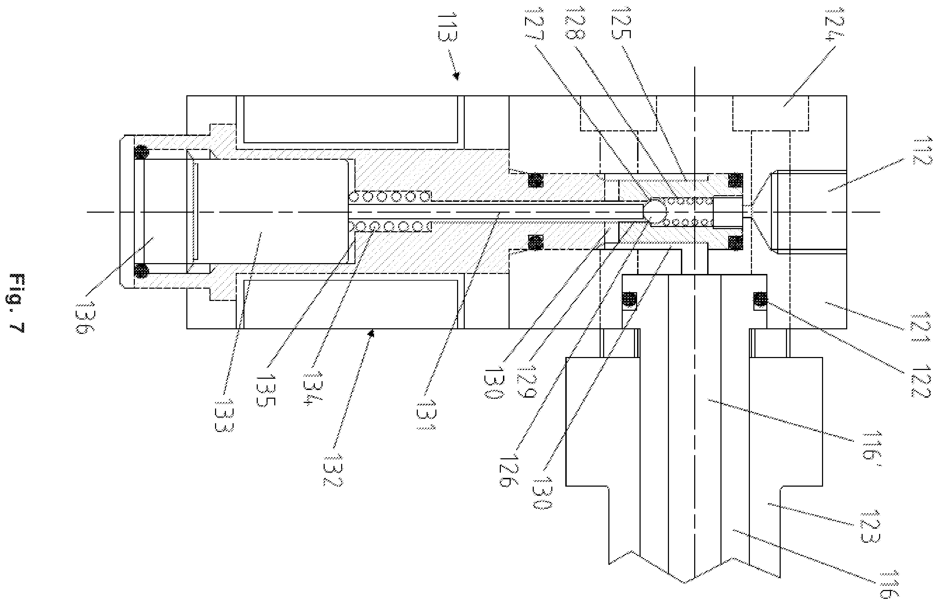

Fig. 7 is an enlarged portion of the inlet-valve system.

Fig. 7 illustrates the inlet-valve system 113 in greater detail. Inside the inlet-valve housing 121, a non-return inlet-valve 125 is provided with an inlet-valve member 126 that is pre-stressed against an inlet-valve seat 127 by an inlet-valve spring 128. The inlet-valve member 126 is exemplified as a ball, however, a different shape, for example oval, conical, plane, or cylindrical, would also work. When the inlet-valve member 126 is displaced from the inlet-valve seat 127 against the force of the inlet-valve spring 128, lubricant flows from the inlet port 112 along the inlet-valve spring 128, passes the inlet-valve member 126 and the inlet-valve seat 127, and enters a channel 129 on an opposite side of the inlet-valve member 126. From the channel 129, the lubricant flows through passage 130 and enters the hollow part 116' of the flow chamber 116, for flow to an outlet-valve system, which have a generalised principle similar to the one disclosed in WO2014/048438. This reference also provides additional technical details as well as explanations to the functioning of the injector presented here, which are not repeated here, for convenience.

In order to displace the inlet-valve member 126 (ball), a push-member 131, exemplified as a push-rod, is provided reciprocal in the channel 129. The push-member 131 is not fastened to the inlet-valve member 126 but is fastened to a reciprocal solenoid-plunger 133 that is driven by a solenoid coil 132. The solenoid-plunger 133 is retracted by a plunger spring 134 when in idle condition. When the solenoid coil 132 is excited by electrical current, the solenoid-plunger 133 is moved forward against the force of the plunger spring 134 until it comes to a halt against a plunger stop 135. Due to the movement of the solenoid-plunger 133, the push-member (push-rod) 131 pushes the inlet-valve member (ball) 126 away from the inlet-valve seat 127, allowing lubricant to flow through the inlet non-return valve 125 and into the flow chamber 116.

In advantageous embodiments, the push-member (push-rod) 131 is withdrawn a distance from the inlet-valve member (ball) 126 when in idle state, such that there is a free range distance in between the push-member 131 and the inlet-valve member 126. When the solenoid coil 132 is excited, the push-member 131 is accelerated by the solenoid coil 132 over the free-range distance before it impacts the inlet-valve member 126 after initial acceleration. This results in the inlet-valve member 126 being displaced abruptly from the inlet-valve seat 127, as compared to a situation where the inlet-valve member 126 moves together with push-member 131 during the first part of the acceleration. The quick displacement of the inlet-valve member 126, in turn, is advantageous for a precise timing of the start of the lubricant injection into the cylinder 1. Optionally, the free-range distance is adjustable by an adjustment screw 136 at the end of the solenoid-plunger 133.

After the injection phase, the lubricant supply from the inlet port 112 to the nozzle 5 is stopped by cutting the current to the solenoid coil 132, which results in the solenoid-plunger 133 being pushed back by the plunger spring 134, and the inlet-valve member 126 returns to the tight inlet-valve seat 127 for an idle phase in the injection cycle.

The amount of lubricant oil is controlled by the flowmeter and the controller/computer makes it possible to regulate the lubricant amount and to effect calibration of the injectors.

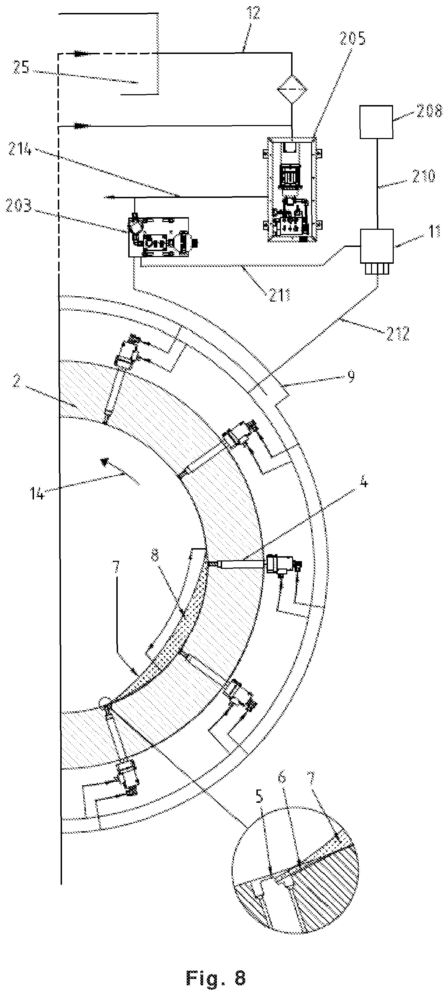

Fig. 8 corresponds to Figs 1 and illustrates a further embodiment of one half of a cylinder 1 of a large slow-running two-stroke engine, for example marine diesel engine. This embodiment comprises oil injectors. the injectors 4 may be HJ Smartlube 4.0 E-injectors. The injectors 4 are connected with a cylinder-manifold with flowmeter 203. The cylinder-manifold with flowmeter is connected with a controller 11 via a communication line 211 for flowmeter feedback signals. The controller 11 may be a local cylinder controller which is connected with a central controller 208 via a communication line 210.

The cylinder-manifold with flowmeter 203 is connected with a pump unit 205. The pump unit 205 is via the supply conduit 12 connected with the lubricant supply 25.

The pump unit 205 is via a pressurized oil feed line 214 connected to cylinder manifolds (common rail) for providing lubricant oil to the injectors 4.

An injector signal bus 212 connects the controller 11 with the injector for regulating the lubricant amount and to effect calibration of the injectors.

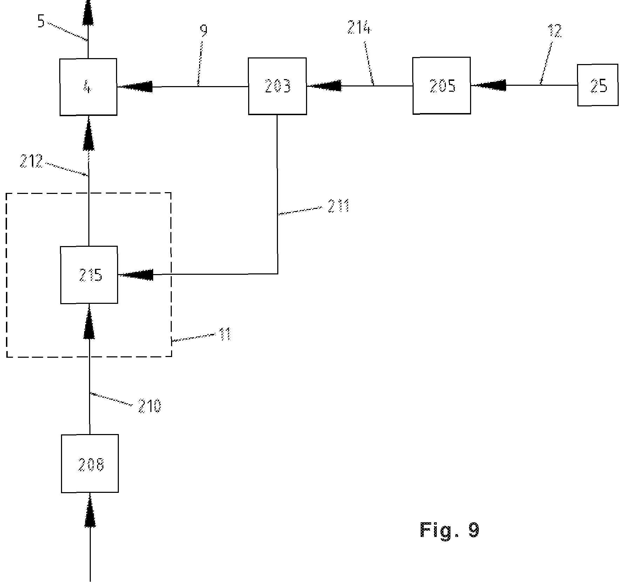

Fig. 9 is a diagram for illustrating the regulation of the injectors 4 in the embodiment illustrated in Fig. 8. Signals from the flowmeter 203 is via the communication line 211 sent to the controller 11. And the injectors 4 receives control signals from the controller 11 via the injector signal bus 212 for the regulation and calibration of the injectors 4. The signals from the flowmeter are introduced in a feedback control algorithm 215 which is stored in the controller 11 and which is used for the establishing the injector signals which are sent to the injectors 4.

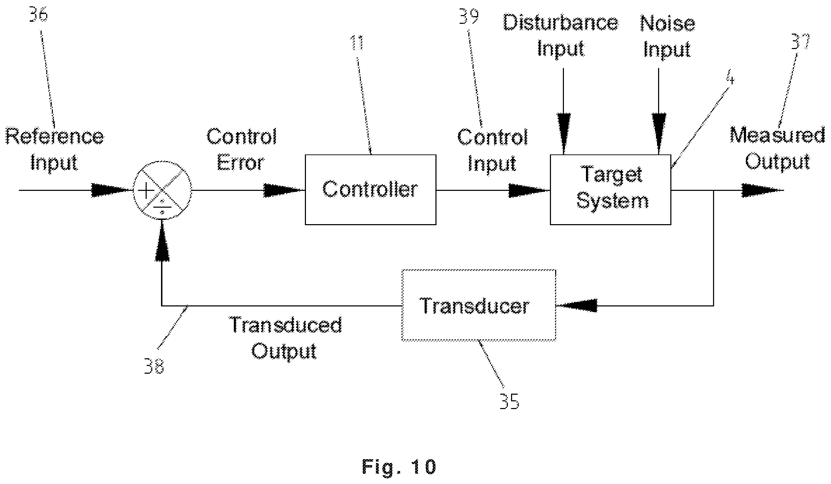

Fig. 10 illustrates a control strategy for use in the controller. 36 is the desired lubricant amount and 37 is the calculated actual lubricant amount. A signal 38 from the flowmeter is sent to the controller 11. The calculations are effected in the controller 11 and a control signal 39 is sent to the injector 4 in order to have a regulation which ensures that the actual lubricant amount 37 corresponds to the desired lubricant amount.

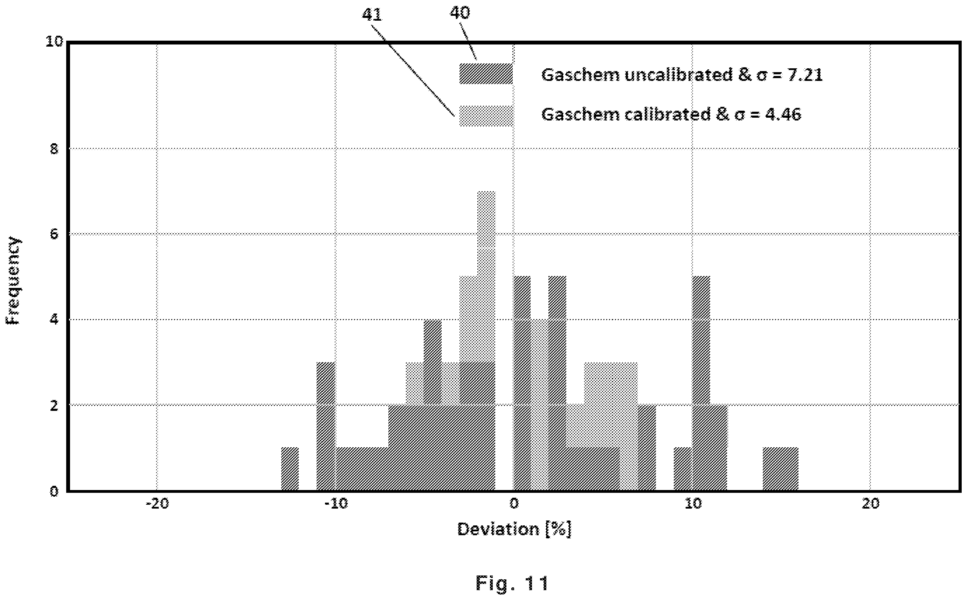

Fig 11 illustrates difference between calibrated injectors 41 and uncalibrated injectors 40. From the illustration it occurs that the uncalibrated injectors 40 has a larger deviation than the calibrated injectors 41.

### Numbering

1 cylinder
2 cylinder liner
3 cylinder wall
4 injector
4' injector housing
4A inlet port of oil injector 4
4B pressure-control port of oil injector 4
5 nozzle
5' nozzle aperture
6 free cut in liner
7 atomised spray from a single injector 4
8 swirling spray
9 lubricant feed conduit
10 pressure-control conduit
11 controller
11' computer
12 supply conduit
13 return conduit
14 swirl in cylinder
15 outlet-valve system of injector 4
16 flow chamber connecting inlet-valve system 13 with outlet-valve system 15
16' to hollow part of flow chamber 16
16A rear chamber
16B first intermediate chamber
16C second intermediate chamber
16D front chamber
17 non-return outlet-valve, exemplified as outlet ball valve
18 outlet-valve member, exemplified as ball
19 outlet-valve seat
20 outlet-valve spring
21 injector base
22 O-ring at end of flow chamber 16
23A rear channel in actuator-member 28 connecting rear chamber 16A with first intermediate chamber 16B
23B intermediate channel between first and second intermediate chamber 16A, 16B
23C front channel in plunger-member 29 between second intermediate chamber 16B and front chamber 16D
24 channel inlet into front channel 23C
25 lubricant supply
26 non-return plunger-valve
26A plunger-valve ball
26B plunger-valve seat, against which the plunger-valve ball 26A is pre-stressed
26C plunger-valve spring pre-stressing plunger-valve ball 26A against plunger-valve seat 26B
27 pressure chamber at rear part 28B
28 actuator-member for pushing head 29' of plunger-member 29
28A actuator-spring acting rearwards on actuator-member 28
28B rear part of actuator-member 28
29 plunger-member
29A head of plunger-member 29
29B plunger spring in second intermediate chamber 16C
30 toggle-valve
30A toggle-valve inlet port
30B toggle-valve outlet port
30C toggle-valve return port
31pressure-valve
31A pressure-valve inlet port
31B pressure-valve return port
31C pressure regulator, ex. spring-loaded pressure adjustment member injection-phase
31D pre-tensioner in pressure-valve 31
32 toggle-member
32A first toggle closure element of toggle-member 32
32B second toggle closure element of toggle-member 32
33 arrow illustrating reciprocal movement of toggle member 32
34 return exit line from controller 11 to return conduit 13
35 flowmeter
36 desired lubricant amount
37 calculated actual lubricant amount
38 signal from flowmeter
39 control signal
40 uncalibrated injector
41 calibrated injector
112 lubricant inlet port of injector 4
113 inlet-valve system of injector 4
114 swirl in cylinder
115 outlet-valve system of injector 4
116 flow chamber connecting inlet-valve system 113 with outlet-valve system 115
116' to hollow part of flow chamber 16
117 outlet non-return valve, exemplified as outlet ball valve
118 outlet-valve member
119 outlet-valve seat
120 outlet-valve spring
121 inlet-valve housing of inlet-valve system 115
122 O-ring at end of flow chamber 116
123 flange for holding flow chamber
124 bolts for holding flange 123 and flow chamber 16 against inlet-valve housing 121
125 inlet non-return valve, exemplified as inlet ball valve
126 inlet-valve member, exemplified as ball
127 inlet-valve seat
128 inlet-valve spring
129 channel in inlet-valve system
130 passage from channel 129 to hollow part 116' of flow chamber 16
131 push-member fastened to solenoid-plunger 133, push-member exemplified as rod
132 solenoid coil
133 solenoid-plunger in solenoid coil 131
134 plunger spring
135 plunger stop
136 adjustment screw for adjustment of the free range distance
203 cylinder manifold with flowmeter
205 pump unit
208 central controller
210 communication line between local cylinder controller and central controller
211 communication line for flowmeter feedback signals
212 injector signal bus
214 pressurized oil feed line
215 feedback control algorithm

## Claims

1. A large slow-running two-stroke engine comprising a cylinder (1) with a reciprocal piston inside and with a lubricant system comprising
- a lubricant supply (25),
- a plurality of lubricant injectors (4) distributed along a perimeter of the cylinder (1) for injection of lubricant into the cylinder (1) at various positions on the perimeter during injection phases,
- a lubricant supply conduit (12) and a lubricant return line (13) connecting the lubricant supply (25) with the lubricant injectors (4),
- at least one flowmeter for measuring the lubricant flow,
the engine further comprising
- a controller (11) for controlling the amount and timing of the lubricant injection by at least one of the lubricant injectors (4),
- a computer (11') to which the controller is connected,
wherein each injector (4) comprises
- an inlet port flow-connected to the lubricant supply conduit (12) for receiving lubricant from it,
- a nozzle (5) with a nozzle aperture (5') extending into the cylinder (1) configured for injecting lubricant from the inlet port (4A) into the cylinder (1) in the injection phase,
- an adjustable valve at the nozzle (5) for opening and closing for flow of lubricant to the nozzle aperture (5') from a pressure chamber in the injector during an injection-cycle,
- one flowmeter is arranged for all injectors in the engine, one flowmeter is arranged for all injectors in a cylinder or one flowmeter is arranged for each injector in the engine,
wherein the controller is arranged for transforming the measured actual flow into an actual amount, **characterised in that**
the engine further comprises a number of desired values for lubricant amount to be injected, typically specified as a feed rate, for specific operation mode, which desired values are stored in a database in the controller,
that the controller is arranged for comparing the calculated actual amount to the desired value and to control the injectors and adjust the setting thereof in order to obtain the desired values for lubricant amount to be injected for a specific operation mode and
that the controller is arranged for calibration of the injectors by measuring the lubricant amount injected at different injection-phases and mapping the results and using the results for determining the injection-phases for the injector in order to obtain the desired lubricant amount at an injection.

2. The large slow-running two-stroke engine according to claim 1, **characterised in that** the lubricant system is chosen from mechanically driven systems, hydraulically driven systems and common-rail systems.

3. The large slow-running two-stroke engine according to claim 1 or 2, **characterised in that** the flowmeter is provided in the lubricant supply conduit (12) connected to the injector.

4. The large slow-running two-stroke engine according to claim 1 or 2, **characterised in that** the flowmeter, in the situation where one flowmeter is arranged for each injector in the engine, is integrated in the injector.

5. The large slow-running two-stroke engine according to any one of the preceding claims, **characterised in that** the engine comprises a hydraulically driven inlet-valve system or that the engine comprises an electrically driven inlet-valve system.

6. A method of lubricating a large slow-running two-stroke engine comprising a cylinder (1) with a reciprocal piston inside and with a system comprising
- a lubricant supply (25),
- a plurality of lubricant injectors (4) distributed along a perimeter of the cylinder (1) for injection of lubricant into the cylinder (1) at various positions on the perimeter during injection phases,
- a lubricant supply conduit (12) and a lubricant return line (13) connecting the lubricant supply (25) with the lubricant injectors (4),
- at least one flowmeter for measuring the lubricant flow,
the engine further comprising
- a controller (11) for controlling the amount and timing of the lubricant injection by at least one of the lubricant injectors (4),
- a computer (11') to which the controller is connected,
wherein each injector (4) comprises
- an inlet port flow-connected to the lubricant supply conduit (12) for receiving lubricant from it,
- a nozzle (5) with a nozzle aperture (5') extending into the cylinder (1) configured for injecting lubricant from the inlet port (4A) into the cylinder (1) in the injection phase,
- an adjustable valve at the nozzle (5) for opening and closing for flow of lubricant to the nozzle aperture (5') from a pressure chamber in the injector during an injection-cycle,
wherein the method comprises in cyclic operation
- in the injection phase, providing pressure-liquid at inlet port of the injector and exerting force on the valve and by the force driving a valve body into motion inside the injector (4) and upon pressure rise above the predetermined limit, pumping a predetermined lubricant volume through the nozzle aperture (5') into the cylinder (1),
- after the injection phase, retracting the valve body by draining pressure-liquid from the injector,
- during retraction re-filling the pressure chamber in the injector with lubricant for a subsequent injection phase,
- providing one flowmeter for all injectors in the engine, one flowmeter for all injectors in a cylinder or one flowmeter for each injector in the engine,
- measuring with the at least one flowmeter the lubricant flow,
- transforming in the controller the measured actual flow into an actual amount,
**characterised in that** the method comprises the steps of:
- providing, for the engine, a number of desired values for lubricant amount to be injected, typically specified as a feed rate, for specific operation mode, which desired values are stored in a database in the controller,
- comparing the calculated actual amount to the desired value, and
- controlling the injectors and adjusting the setting thereof in order to regulate the amount to the desired value for lubricant amount to be injected for a specific operation mode,
- effecting a regulation of the lubricant amount continuously at different time intervals, which intervals vary between 10 ms. and 10 min., wherein the continuously regulation includes adjustment of the lubricant amount at different sample intervals, which sample intervals vary from one regulation per injection to a regulation based on 100 preceding injections, or
- effecting an adjustment of the lubricant amount discontinuously at time intervals between 1minute and 30 days, preferably between 1 hour and 30 days and more preferably between 1 day and 30 days, wherein the discontinuous adjustment includes a calibration of the injectors, which calibration is effected by measuring the lubricant amount injected at different injection-phases and mapping the results and using the results for determining the injection-phases for the injector in order to obtain the desired lubricant amount at an injection.

7. The method according to claim 6, **characterised in that** the calibration of the injectors is effected for the working spectrum of the injectors, which working spectrum typically is between 0 and 100 ms.

8. The method according to claim 6 or 7, **characterised in that** the method comprises the steps of implementing an automatic test program, controlling that the injectors in a cylinder supply the desired and sufficient lubricant amount.

9. The method according to claim 8, **characterised in that** a calibration of the injectors is effected manually or automatically in the situation where an incorrect lubricant amount is provided, especially in case the lubricant amount is insufficient.

10. The method according to claim 8 or 9, **characterised in that** the test program involves a step of correcting the calibration.

11. The method according to any of the claims 6-10, **characterised in that** the regulation of the lubricant amount is controlled by a feedback control/regulation, for example a PID regulation or a more sophisticated model-based regulation

12. The method according to any of the claims 6-11, **characterised in that** the method involves storing regulation values in a database in the controller.

13. The method according to any of the claims 6-12, **characterised in that** the method involves storing of calibrated timing values for each injector in in a database in the controller.

14. Use of an engine according to anyone of the claims 1-5 for SIP injection into the cylinder of a large marine engine or combustion engine for a power plant at a lubricant pressure in the range of 25 bar to 100 bar.

15. Use of a method according to anyone of the claims 6-13 for SIP injection into the cylinder of a large marine engine or combustion engine for a power plant at a lubricant pressure in the range of 25 bar to 100 bar.

## Patentansprüche

1. Großer langsam laufender Zweitaktmotor, umfassend einen Zylinder (1) mit einem hin- und hergehenden Kolben im Inneren und mit einem Schmiermittelsystem, umfassend
eine Schmiermittelzufuhr (25),
eine Vielzahl von Schmiermitteleinspritzvorrichtungen (4), die zur Einspritzung von Schmiermittel in den Zylinder (1) entlang eines Umfangs des Zylinders (1) an verschiedenen Positionen an dem Umfang während Einspritzphasen verteilt ist,
eine Schmiermittelzufuhrleitung (12) und eine Schmiermittelrücklaufleitung (13), welche die Schmiermittelzufuhr (25) mit den Schmiermitteleinspritzvorrichtungen (4) verbinden,
mindestens einen Durchflussmesser zur Messung des Schmiermitteldurchflusses,
wobei der Motor ferner Folgendes umfasst:
eine Steuerung (11) zum Steuern der Menge und der Zeitsteuerung der Schmiermitteleinspritzung durch mindestens eine der Schmiermitteleinspritzvorrichtungen (4),
einen Computer (11'), mit dem die Steuerung verbunden ist,
wobei jede Einspritzvorrichtung (4) Folgendes umfasst:
einen Einlassanschluss, der mit der Schmiermittelzufuhrleitung (12) strömungsverbunden ist, um Schmiermittel von dieser aufzunehmen,
eine Düse (5) mit einer sich in den Zylinder (1) erstreckenden Düsenöffnung (5'), die dazu konfiguriert ist, in der Einspritzphase Schmiermittel von dem Einlassanschluss (4A) in den Zylinder (1) einzuspritzen,
ein einstellbares Ventil an der Düse (5) zum Öffnen und Schließen für einen Schmiermitteldurchfluss zu der Düsenöffnung (5') von einer Druckkammer in der Einspritzvorrichtung während eines Einspritzzyklus,
wobei ein Durchflussmesser für alle Einspritzvorrichtungen in dem Motor angeordnet ist, ein Durchflussmesser für alle Einspritzvorrichtungen in einem Zylinder angeordnet ist oder ein Durchflussmesser für jede Einspritzvorrichtung in dem Motor angeordnet ist,
wobei die Steuerung angeordnet ist, um den gemessenen Ist-Durchfluss in eine Ist-Menge umzuwandeln, **dadurch gekennzeichnet, dass**
der Motor ferner eine Reihe von gewünschten Werten für die einzuspritzende Schmiermittelmenge, typischerweise als Fördermenge definiert, für einen spezifischen Betriebsmodus umfasst, wobei die gewünschten Werte in einer Datenbank in der Steuerung gespeichert sind,
dass die Steuerung angeordnet ist, um die berechnete Ist-Menge mit dem gewünschten Wert zu vergleichen und die Einspritzvorrichtungen zu steuern und deren Einrichtung einzustellen, um die gewünschten Werte für die einzuspritzende Schmiermittelmenge für einen spezifischen Betriebsmodus zu erlangen, und dass die Steuerung zur Kalibrierung der Einspritzvorrichtungen durch Messen der bei unterschiedlichen Einspritzphasen eingespritzten Schmiermittelmenge und Zuordnen der Ergebnisse und Verwenden der Ergebnisse zum Bestimmen der Einspritzphasen für die Einspritzvorrichtung angeordnet ist, um die gewünschte Schmiermittelmenge bei einer Einspritzung zu erlangen.

2. Großer langsam laufender Zweitaktmotor nach Anspruch 1, **dadurch gekennzeichnet, dass** das Schmiermittelsystem aus mechanisch angetriebenen Systemen, hydraulisch angetriebenen Systemen und Common-Rail-Systemen ausgewählt ist.

3. Großer langsam laufender Zweitaktmotor nach Anspruch 1 oder 2, **dadurch gekennzeichnet, dass** der Durchflussmesser in der mit der Einspritzvorrichtung verbundenen Schmiermittelzufuhrleitung (12) bereitgestellt ist.

4. Großer langsam laufender Zweitaktmotor nach Anspruch 1 oder 2, **dadurch gekennzeichnet, dass** der Durchflussmesser in dem Fall, in dem für jede Einspritzvorrichtung in dem Motor ein Durchflussmesser angeordnet ist, in die Einspritzvorrichtung integriert ist.

5. Großer langsam laufender Zweitaktmotor nach einem der vorhergehenden Ansprüche, **dadurch gekennzeichnet, dass** der Motor ein hydraulisch angetriebenes Einlassventilsystem umfasst oder dass der Motor ein elektrisch angetriebenes Einlassventilsystem umfasst.

6. Verfahren zum Schmieren eines großen langsam laufenden Zweitaktmotors, umfassend einen Zylinder (1) mit einem hin- und hergehenden Kolben im Inneren und mit einem Schmiermittelsystem, umfassend
eine Schmiermittelzufuhr (25),
eine Vielzahl von Schmiermitteleinspritzvorrichtungen (4), die zur Einspritzung von Schmiermittel in den Zylinder (1) entlang eines Umfangs des Zylinders (1) an verschiedenen Positionen an dem Umfang während Einspritzphasen verteilt ist,
eine Schmiermittelzufuhrleitung (12) und eine Schmiermittelrücklaufleitung (13), welche die Schmiermittelzufuhr (25) mit den Schmiermitteleinspritzvorrichtungen (4) verbinden,
mindestens einen Durchflussmesser zur Messung des Schmiermitteldurchflusses,
wobei der Motor ferner Folgendes umfasst:
eine Steuerung (11) zum Steuern der Menge und der Zeitsteuerung der Schmiermitteleinspritzung durch mindestens eine der Schmiermitteleinspritzvorrichtungen (4),
einen Computer (11'), mit dem die Steuerung verbunden ist,
wobei jede Einspritzvorrichtung (4) Folgendes umfasst:
einen Einlassanschluss, der mit der Schmiermittelzufuhrleitung (12) strömungsverbunden ist, um Schmiermittel von dieser aufzunehmen,
eine Düse (5) mit einer sich in den Zylinder (1) erstreckenden Düsenöffnung (5'), die dazu konfiguriert ist, in der Einspritzphase Schmiermittel von dem Einlassanschluss (4A) in den Zylinder (1) einzuspritzen,
ein einstellbares Ventil an der Düse (5) zum Öffnen und Schließen für einen Schmiermitteldurchfluss zu der Düsenöffnung (5') von einer Druckkammer in der Einspritzvorrichtung während eines Einspritzzyklus,
wobei das Verfahren im zyklischen Betrieb Folgendes umfasst:
Bereitstellen einer Druckflüssigkeit an dem Einlassanschluss der Einspritzvorrichtung und Ausüben einer Kraft auf das Ventil in der Einspritzphase und durch die Kraft Antreiben eines Ventilkörpers zur Bewegung innerhalb der Einspritzvorrichtung (4) und Pumpen eines vorbestimmten Schmiermittelvolumens durch die Düsenöffnung (5') in den Zylinder (1) bei einem Druckanstieg über den vorbestimmten Grenzwert,
Zurückziehen des Ventilkörpers durch Ablassen von Druckflüssigkeit aus der Einspritzvorrichtung nach der Einspritzphase,
Wiederbefüllen der Druckkammer in der Einspritzvorrichtung mit Schmiermittel für eine nachfolgende Einspritzphase während des Zurückziehens,
Bereitstellen eines Durchflussmessers für alle Einspritzvorrichtungen in dem Motor, eines Durchflussmessers für alle Einspritzvorrichtungen in einem Zylinder oder eines Durchflussmessers für jede Einspritzvorrichtung in dem Motor,
Messen des Schmiermitteldurchflusses mit dem mindestens einen Durchflussmesser,
Umwandeln des gemessenen Ist-Durchflusses in eine Ist-Menge in der Steuerung,
**dadurch gekennzeichnet, dass** das Verfahren die folgenden Schritte umfasst:
Bereitstellen einer Reihe von gewünschten Werten für die einzuspritzende Schmiermittelmenge für den Motor, typischerweise als Fördermenge definiert, für einen spezifischen Betriebsmodus, wobei die gewünschten Werte in einer Datenbank in der Steuerung gespeichert sind,
Vergleichen der berechneten Ist-Menge mit dem gewünschten Wert und
Steuern der Einspritzvorrichtungen und Einstellen von deren Einrichtung, um die Menge auf den gewünschten Wert für die einzuspritzende Schmiermittelmenge für einen spezifischen Betriebsmodus zu regulieren,
Bewirken einer kontinuierlichen Regulierung der Schmiermittelmenge in unterschiedlichen Zeitintervallen, die zwischen 10 ms und 10 min variieren, wobei die kontinuierliche Regulierung eine Einstellung der Schmiermittelmenge in unterschiedlichen Probenahmeintervallen beinhaltet, wobei die Probenahmeintervalle von einer Regulierung pro Einspritzung bis zu einer Regulierung basierend auf 100 vorhergehenden Einspritzungen variieren, oder
Bewirken einer diskontinuierlichen Einstellung der Schmiermittelmenge in Zeitintervallen zwischen 1 Minute und 30 Tagen, vorzugsweise zwischen 1 Stunde und 30 Tagen und noch bevorzugter zwischen 1 Tag und 30 Tagen, wobei die diskontinuierliche Einstellung eine Kalibrierung der Einspritzvorrichtungen beinhaltet, wobei die Kalibrierung durch Messen der bei unterschiedlichen Einspritzphasen eingespritzten Schmiermittelmenge und Zuordnen der Ergebnisse und Verwenden der Ergebnisse zum Bestimmen der Einspritzphasen für den Einspritzvorrichtung bewirkt wird, um die gewünschte Schmiermittelmenge bei einer Einspritzung zu erlangen.

7. Verfahren nach Anspruch 6, **dadurch gekennzeichnet, dass** die Kalibrierung der Einspritzvorrichtungen für das Arbeitsspektrum der Einspritzvorrichtungen bewirkt wird, wobei das Arbeitsspektrum typischerweise zwischen 0 und 100 ms liegt.

8. Verfahren nach Anspruch 6 oder 7, **dadurch gekennzeichnet, dass** das Verfahren die Schritte des Implementierens eines automatischen Testprogramms umfasst, das steuert, dass die Einspritzvorrichtungen in einem Zylinder die gewünschte und ausreichende Schmiermittelmenge zuführen.

9. Verfahren nach Anspruch 8, **dadurch gekennzeichnet, dass** eine Kalibrierung der Einspritzvorrichtungen in dem Fall, in dem eine falsche Schmiermittelmenge bereitgestellt wird, insbesondere wenn die Schmiermittelmenge nicht ausreichend ist, manuell oder automatisch bewirkt wird.

10. Verfahren nach Anspruch 8 oder 9, **dadurch gekennzeichnet, dass** das Testprogramm einen Schritt des Korrigierens der Kalibrierung involviert.

11. Verfahren nach einem der Ansprüche 6-10, **dadurch gekennzeichnet, dass** die Regulierung der Schmiermittelmenge durch eine Rückkopplungssteuerung/-regulierung, beispielsweise eine PID-Regulierung oder eine komplexere modellbasierte Regulierung, gesteuert wird.

12. Verfahren nach einem der Ansprüche 6-11, **dadurch gekennzeichnet, dass** das Verfahren Speichern von Regulierungswerten in einer Datenbank in der Steuerung involviert.

13. Verfahren nach einem der Ansprüche 6-12, **dadurch gekennzeichnet, dass** das Verfahren Speichern von kalibrierten Zeitsteuerungswerten für jede Einspritzvorrichtung in einer Datenbank in der Steuerung involviert.

14. Verwendung eines Motors nach einem der Ansprüche 1-5 zur SIP-Einspritzung in den Zylinder eines großen Schiffsmotors oder Verbrennungsmotors für ein Kraftwerk bei einem Schmiermitteldruck im Bereich von 25 bar bis 100 bar.

15. Verwendung eines Verfahrens nach einem der Ansprüche 6-13 zur SIP-Einspritzung in den Zylinder eines großen Schiffsmotors oder Verbrennungsmotors für ein Kraftwerk bei einem Schmiermitteldruck im Bereich von 25 bar bis 100 bar.

## Revendications

1. Moteur de grande dimension à deux temps à déplacement lent comprenant un cylindre (1) avec un piston alternatif à l'intérieur et avec un système de lubrification comprenant
- une alimentation en lubrifiant (25),
- une pluralité d'injecteurs de lubrifiant (4) répartis le long d'un périmètre du cylindre (1) pour l'injection de lubrifiant à l'intérieur du cylindre (1) à différentes positions sur le périmètre pendant les phases d'injection,
- un conduit d'alimentation en lubrifiant (12) et une conduite de retour de lubrifiant (13) reliant l'alimentation en lubrifiant (25) aux injecteurs de lubrifiant (4),
- au moins un débitmètre pour mesurer le débit de lubrifiant, le moteur comprenant également
- un dispositif de commande (11) pour commander la quantité et l'instant de distribution de l'injection de lubrifiant par au moins l'un des injecteurs de lubrifiant (4),
- un ordinateur (11') auquel est connecté le dispositif de commande,
dans lequel chaque injecteur (4) comprend
- un orifice d'entrée en communication fluidique avec le conduit d'alimentation en lubrifiant (12) pour recevoir du lubrifiant à partir de celui-ci,
- une buse (5) avec une ouverture de buse (5') se prolongeant à l'intérieur du cylindre (1) configurée pour injecter du lubrifiant à partir de l'orifice d'entrée (4A) à l'intérieur du cylindre (1) lors de la phase d'injection,
- une soupape ajustable au niveau de la buse (5) destinée à s'ouvrir et à se fermer pour permettre l'écoulement de lubrifiant vers l'ouverture de buse (5') à partir d'une chambre de pression dans l'injecteur pendant un cycle d'injection,
- un débitmètre est agencé pour tous les injecteurs dans le moteur, un débitmètre est agencé pour tous les injecteurs dans un cylindre ou un débitmètre est agencé pour chaque injecteur dans le moteur,
dans lequel le dispositif de commande est agencé pour transformer le débit réel mesuré en une quantité réelle, **caractérisé en ce que**
le moteur comprend également un certain nombre de valeurs souhaitées pour la quantité de lubrifiant à injecter, généralement spécifiées sous forme de débit d'alimentation, pour un mode de fonctionnement spécifique, lesquelles valeurs souhaitées sont stockées dans une base de données dans le dispositif de commande,
**en ce que** le dispositif de commande est agencé pour comparer la quantité réelle calculée à la valeur souhaitée et pour commander les injecteurs et ajuster leur réglage afin d'obtenir les valeurs souhaitées pour la quantité de lubrifiant à injecter pour un mode de fonctionnement spécifique et **en ce que** le dispositif de commande est agencé pour l'étalonnage des injecteurs en mesurant la quantité de lubrifiant injectée à différentes phases d'injection et en mappant les résultats et en utilisant les résultats pour déterminer les phases d'injection pour l'injecteur afin d'obtenir la quantité de lubrifiant souhaitée lors d'une injection.

2. Moteur de grande dimension à deux temps à déplacement lent selon la revendication 1, **caractérisé en ce que** le système de lubrification est choisi parmi des systèmes à entraînement mécanique, des systèmes à entraînement hydraulique et des systèmes à rampe commune.

3. Moteur de grande dimension à deux temps à déplacement lent selon la revendication 1 ou 2, **caractérisé en ce que** le débitmètre est prévu dans le conduit d'alimentation en lubrifiant (12) relié à l'injecteur.

4. Moteur de grande dimension à deux temps à déplacement lent selon la revendication 1 ou 2, **caractérisé en ce que** le débitmètre, dans la situation où un débitmètre est agencé pour chaque injecteur dans le moteur, est intégré dans l'injecteur.

5. Moteur de grande dimension à deux temps à déplacement lent selon l'une quelconque des revendications précédentes, **caractérisé en ce que** le moteur comprend un système de soupape d'admission à entraînement hydraulique ou **en ce que** le moteur comprend un système de soupape d'admission à entraînement électrique.

6. Procédé de lubrification d'un moteur de grande dimension à deux temps à déplacement lent comprenant un cylindre (1) avec un piston alternatif à l'intérieur et avec un système comprenant
- une alimentation en lubrifiant (25),
- une pluralité d'injecteurs de lubrifiant (4) répartis le long d'un périmètre du cylindre (1) pour l'injection de lubrifiant à l'intérieur du cylindre (1) à différentes positions sur le périmètre pendant les phases d'injection,
- un conduit d'alimentation en lubrifiant (12) et une conduite de retour de lubrifiant (13) reliant l'alimentation en lubrifiant (25) aux injecteurs de lubrifiant (4),
- au moins un débitmètre pour mesurer le débit de lubrifiant, le moteur comprenant également
- un dispositif de commande (11) pour commander la quantité et l'instant de distribution de l'injection de lubrifiant par au moins l'un des injecteurs de lubrifiant (4),
- un ordinateur (11') auquel est connecté le dispositif de commande,
dans lequel chaque injecteur (4) comprend
- un orifice d'entrée en communication fluidique avec le conduit d'alimentation en lubrifiant (12) pour recevoir du lubrifiant à partir de celui-ci,
- une buse (5) avec une ouverture de buse (5') se prolongeant à l'intérieur du cylindre (1) configurée pour injecter du lubrifiant à partir de l'orifice d'entrée (4A) à l'intérieur du cylindre (1) lors de la phase d'injection,
- une soupape ajustable au niveau de la buse (5) destinée à s'ouvrir et à se fermer pour permettre l'écoulement de lubrifiant vers l'ouverture de buse (5') à partir d'une chambre de pression dans l'injecteur pendant un cycle d'injection,
dans lequel le procédé comprend, au cours d'un fonctionnement cyclique,
- lors de la phase d'injection, la fourniture du liquide sous pression au niveau de l'orifice d'entrée de l'injecteur et l'application d'une force sur la soupape et par la force entraînant un corps de soupape en mouvement à l'intérieur de l'injecteur (4) et lors d'une augmentation de pression au-dessus de la limite prédéterminée, le pompage d'un volume de lubrifiant prédéterminé à travers l'ouverture de buse (5') à l'intérieur du cylindre (1),
- après la phase d'injection, la rétraction du corps de soupape par le drainage de liquide sous pression à partir de l'injecteur,
- pendant la rétraction, le remplissage à nouveau de lubrifiant de la chambre de pression dans l'injecteur pour une phase d'injection ultérieure,
- la fourniture d'un débitmètre pour tous les injecteurs dans le moteur, d'un débitmètre pour tous les injecteurs dans un cylindre ou d'un débitmètre pour chaque injecteur dans le moteur,
- la mesure du débit de lubrifiant à l'aide de l'au moins un débitmètre,
- la transformation, dans le dispositif de commande, du débit réel mesuré en une quantité réelle,
**caractérisé en ce que** le procédé comprend les étapes de :
- la fourniture, pour le moteur, d'un certain nombre de valeurs souhaitées pour la quantité de lubrifiant à injecter, généralement spécifiées sous forme de débit d'alimentation, pour un mode de fonctionnement spécifique, lesquelles valeurs souhaitées sont stockées dans une base de données dans le dispositif de commande,
- la comparaison de la quantité réelle calculée à la valeur souhaitée, et
- la commande des injecteurs et l'ajustement de leur réglage afin de réguler la quantité à la valeur souhaitée pour la quantité de lubrifiant à injecter pour un mode de fonctionnement spécifique,
- la réalisation d'une régulation de la quantité de lubrifiant de manière continue à différents intervalles de temps, lesquels intervalles varient entre 10 ms et 10 min, dans lequel la régulation continue comprend l'ajustement de la quantité de lubrifiant à différents intervalles d'échantillonnage, lesquels intervalles d'échantillonnage varient d'une régulation par injection à une régulation basée sur 100 injections précédentes, ou
- la réalisation d'un ajustement de la quantité de lubrifiant de manière discontinue à des intervalles de temps entre 1 minute et 30 jours, de préférence entre 1 heure et 30 jours et de préférence encore entre 1 jour et 30 jours, dans lequel l'ajustement de manière discontinue comprend un étalonnage des injecteurs, lequel étalonnage est effectué en mesurant la quantité de lubrifiant injectée à différentes phases d'injection et en mappant les résultats et en utilisant les résultats pour déterminer les phases d'injection pour l'injecteur afin d'obtenir la quantité de lubrifiant souhaitée lors d'une injection.

7. Procédé selon la revendication 6, **caractérisé en ce que** l'étalonnage des injecteurs est réalisé pour le spectre de travail des injecteurs, lequel spectre de travail est typiquement compris entre 0 et 100 ms.

8. Procédé selon la revendication 6 ou 7, **caractérisé en ce que** le procédé comprend les étapes de mise en œuvre d'un programme de test automatique, commandant la fourniture par les injecteurs dans un cylindre de la quantité de lubrifiant souhaitée et suffisante.

9. Procédé selon la revendication 8, **caractérisé en ce qu'un** étalonnage des injecteurs est réalisé manuellement ou automatiquement dans la situation où une quantité de lubrifiant incorrecte est fournie, notamment dans le cas où la quantité de lubrifiant est insuffisante.

10. Procédé selon la revendication 8 ou 9, **caractérisé en ce que** le programme de test comporte une étape de correction de l'étalonnage.

11. Procédé selon l'une quelconque des revendications 6 à 10, **caractérisé en ce que** la régulation de la quantité de lubrifiant est commandée par une commande/régulation en circuit fermé, par exemple une régulation PID ou une régulation basée sur un modèle plus sophistiqué.

12. Procédé selon l'une quelconque des revendications 6 à 11, **caractérisé en ce que** le procédé comprend le stockage des valeurs de régulation dans une base de données dans le dispositif de commande.

13. Procédé selon l'une quelconque des revendications 6 à 12, **caractérisé en ce que** le procédé comprend le stockage des valeurs d'instants de distribution étalonnées pour chaque injecteur dans une base de données dans le dispositif de commande.

14. Utilisation d'un moteur selon l'une quelconque des revendications 1 à 5 pour une injection SIP à l'intérieur du cylindre d'un moteur marin de grande dimension ou d'un moteur à combustion pour une centrale électrique à une pression de lubrifiant dans la plage de 25 bars à 100 bars.

15. Utilisation d'un procédé selon l'une quelconque des revendications 6 à 13 pour une injection SIP à l'intérieur du cylindre d'un moteur marin de grande dimension ou d'un moteur à combustion pour une centrale électrique à une pression de lubrifiant dans la plage de 25 bars à 100 bars.
